# EUROPEAN PATENT APPLICATION

(11) **EP 4 819 733 A1**
(43) Date of publication of application: **07.10.2026**
(21) Application number: 23959955.8
(22) Date of filing: 01.12.2023
(51) Int. Cl.: H04W 72/21

(54) **DATA TRANSMISSION METHODS AND APPARATUSES, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIN, Yanan, Dongguan, Guangdong 523860 (CN)
(74) Representative: Taor, Simon Edward William
(86) International application number: PCT/CN2023/135926
(87) International publication number: WO 2025/112049

(57) **Abstract**

Provided are a data transmission method, apparatus, device, and storage medium relate to the field of communication technologies. The method includes: transmitting, by a terminal device, first uplink data and first uplink control information on a first channel, whereon the first channel is a data channel or a control channel (510). By transmitting the first uplink data and the first uplink control information in a multiplexed manner on a same channel, which may be a data channel or a control channel, reliability of small data transmission and system efficiency are improved.

## Description

### TECHNICAL FIELD

Embodiments of the present disclosure relate to the technical field of communication, and in particular, to data transmission methods and apparatuses, devices, and a storage medium.

### BACKGROUND

For uplink data transmission, communication systems generally support the following two manners: 1. dynamic scheduling; and 2. semi-persistent scheduling.

With the development of communication technologies, for example, in 6G Ultra Reliable Low Latency Communication (URLLC) services, the data volume per transmission is relatively small, but the requirements for reliability and latency are extremely stringent, and such URLLC data packets arrive randomly in many cases. For such applications, either of the above two manners for uplink scheduling suffers from certain drawbacks.

Accordingly, further research is needed for uplink data transmission.

### SUMMARY

Embodiments of the present disclosure provide data transmission methods and apparatuses, devices, and a storage medium.

Technical solutions provided by the embodiments of the present disclosure are as follows.

According to one aspect of the embodiments of the present disclosure, a data transmission method is provided. The method is performed by a terminal device, and includes:

transmitting first uplink data and first uplink control information on a first channel, the first channel being a data channel or a control channel.

According to one aspect of the embodiments of the present disclosure, a data transmission method is provided. The method is performed by a network device, and includes:
receiving first uplink data and first uplink control information transmitted on a first channel, the first channel being a data channel or a control channel.

According to one aspect of the embodiments of the present disclosure, a data transmission apparatus is provided. The apparatus includes:
a transmitting module, configured to transmit first uplink data and first uplink control information on a first channel, the first channel being a data channel or a control channel.

According to one aspect of the embodiments of the present disclosure, a data transmission apparatus is provided. The apparatus includes:
a receiving module, configured to receive first uplink data and first uplink control information transmitted on a first channel, the first channel being a data channel or a control channel.

According to one aspect of the embodiments of the present disclosure, a communication device is provided, which includes a processor and a memory. The memory is configured to store a computer program, and the processor is configured to execute the computer program to implement the data transmission method on the terminal device side or the data transmission method on the network device side.

According to one aspect of the embodiments of the present disclosure, a computer-readable storage medium is provided. The storage medium has stored a computer program, and the computer program may be executed by a processor to implement the data transmission method on the terminal device side or the data transmission method on the network device side.

According to one aspect of the embodiments of the present disclosure, a computer program product is provided. The computer program product includes computer instructions, the computer instructions are stored in a computer-readable storage medium, and a processor may read and execute the computer instructions from the computer-readable storage medium to implement the data transmission method on the terminal device side or the data transmission method on the network device side.

Technical solutions provided by the embodiments of the present disclosure may include the following beneficial effects:
By multiplexing the first uplink data and the first uplink control information for transmission on a same channel which may be a data channel or a control channel, reliability and system efficiency of small data transmission are improved.

### BRIEF DESCRIPTION OF THE DRAWINGS

FIG. 1 is a schematic structural diagram of a communication system provided by an embodiment of the present disclosure;
FIG. 2 is a schematic structural diagram of another communication system provided by an embodiment of the present disclosure;
FIG. 3 is a schematic structural diagram of still another communication system provided by an embodiment of the present disclosure;
FIG. 4 is a schematic diagram of numbers of UCI bits corresponding to different PUCCH resource sets provided by an embodiment of the present disclosure;
FIG. 5 is a flowchart of a data transmission method provided by an embodiment of the present disclosure;
FIG. 6 is a schematic diagram of constraint condition 1 provided by an embodiment of the present disclosure;
FIG. 7 is a schematic diagram of constraint condition 2 provided by an embodiment of the present disclosure;
FIG. 8 is a flowchart of a data transmission method provided by another embodiment of the present disclosure;
FIG. 9 is a block diagram of a data transmission apparatus provided by an embodiment of the present disclosure;
FIG. 10 is a block diagram of a data transmission apparatus provided by another embodiment of the present disclosure;
FIG. 11 is a structural diagram of a terminal device provided by an embodiment of the present disclosure;
FIG. 12 is a structural diagram of a network device provided by an embodiment of the present disclosure.

### DETAILED DESCRIPTION

For making the objects, technical solutions, and advantages of the present disclosure more clear, embodiments of the present disclosure will be described in further detail below in conjunction with the accompanying drawings.

The network architecture and service scenarios described in the embodiments of the present disclosure are intended to illustrate the technical solutions of the embodiments of the present disclosure more clearly, and do not constitute limitations to the technical solutions provided in the embodiments of the present disclosure. Those of ordinary skill in the art will appreciate that, with the evolution of network architectures and the emergence of new service scenarios, the technical solutions provided in the embodiments of the present disclosure are equally applicable to similar technical problems.

The technical solutions of the embodiments of the present disclosure may be applied to various communication systems, for example: Global System of Mobile communication (GSM) systems, Code Division Multiple Access (CDMA) systems, Wideband Code Division Multiple Access (WCDMA) systems, General Packet Radio Service (GPRS), Long Term Evolution (LTE) systems, Advanced Long Term Evolution (LTE-A) systems, New Radio (NR) systems, evolved systems of the NR system, LTE-based access to unlicensed spectrum (LTE-U) systems, NR-based access to unlicensed spectrum (NR-U) systems, Non-Terrestrial Networks (NTN) systems, Universal Mobile Telecommunication System (UMTS), Wireless Local Area Networks (WLAN), Wireless Fidelity (WiFi), 5th-Generation (5G) systems, Beyond 5G (B5G) systems, 6th-Generation (6G) systems, or other communication systems.

Generally, conventional communication systems support a limited number of connections and are easy to implement. However, with the development of communication technologies, mobile communication systems will support not only conventional communications but also, for example, Device-to-Device (D2D) communication, Machine-to-Machine (M2M) communication, Machine Type Communication (MTC), Vehicle-to-Vehicle (V2V) communication, or Vehicle-to-Everything (V2X) communication. Embodiments of the present disclosure may also be applied to these communication systems.

The communication systems in the embodiments of the present disclosure may be applied to Carrier Aggregation (CA) scenarios, Dual Connectivity (DC) scenarios, or Standalone (SA) deployment scenarios.

The communication systems in the embodiments of the present disclosure may be applied to unlicensed spectrum, where unlicensed spectrum may also be regarded as shared spectrum; alternatively, the communication systems in the embodiments of the present disclosure may be applied to licensed spectrum, where licensed spectrum may also be regarded as non-shared spectrum.

Embodiments of the present disclosure may be applied to Non-Terrestrial Networks (NTN) systems or Terrestrial Networks (TN) systems. NTN generally provides communication services to terrestrial users by way of satellite communication. Current NTN systems include NR-NTN and IoT-NTN systems, and may further include other NTN systems in the future.

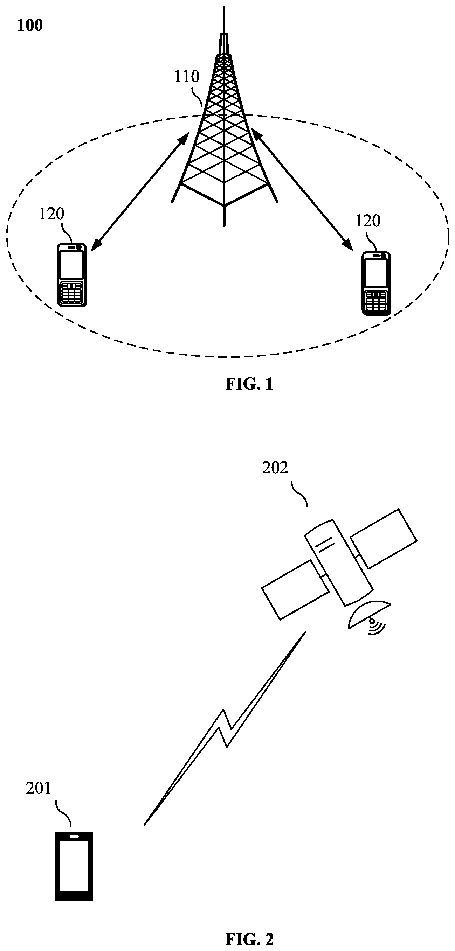

Exemplarily, FIG. 1 is a schematic architectural diagram of a communication system provided by the present disclosure. As shown in FIG. 1, a communication system 100 may include a network device 110, which may be a device that communicates with a terminal device 120. The network device 110 may provide communication coverage for a particular geographic area, and may communicate with terminal devices located within the coverage area.

FIG. 1 exemplarily illustrates one network device 110 and two terminal devices 120. In some embodiments of the present disclosure, the communication system 100 may include a plurality of network devices, and the coverage area of each network device may include other numbers of terminal devices, which is not limited by the embodiments of the present disclosure.

Exemplarily, FIG. 2 is a schematic architectural diagram of another communication system provided by an embodiment of the present disclosure. Referring to FIG. 2, the communication system may include a terminal device 201 and a satellite 202, and wireless communication may be performed between the terminal device 201 and the satellite 202. The network formed between the terminal device 201 and the satellite 202 may also be referred to as an NTN. In the architecture of the communication system shown in FIG. 2, the satellite 202 may have the function of a base station, and direct communication may be performed between the terminal device 201 and the satellite 202. Under such a system architecture, the satellite 202 may be referred to as a network device. In some embodiments of the present disclosure, the communication system may include a plurality of satellites 202, and the coverage area of each satellite 202 may include other numbers of terminal devices, which is not limited by the embodiments of the present disclosure.

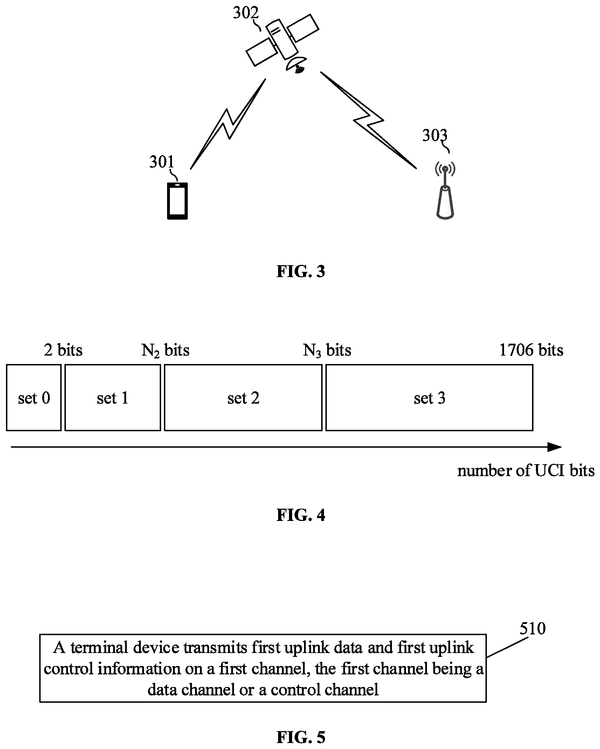

Exemplarily, FIG. 3 is a schematic architectural diagram of another communication system provided by an embodiment of the present disclosure. Referring to FIG. 3, the communication system includes a terminal device 301, a satellite 302, and a base station 303. Wireless communication may be performed between the terminal device 301 and the satellite 302, and communication may be performed between the satellite 302 and the base station 303. The network formed among the terminal device 301, the satellite 302, and the base station 303 may also be referred to as an NTN. In the architecture of the communication system shown in FIG. 3, the satellite 302 may not have the function of a base station, and communication between the terminal device 301 and the base station 303 needs to be relayed via the satellite 302. Under such a system architecture, the base station 303 may be referred to as a network device. In some embodiments of the present disclosure, the communication system may include a plurality of base stations 303, each base station 303 may communicate with one or more satellites 302, and the coverage area of each satellite 302 may include other numbers of terminal devices, which is not limited by the embodiments of the present disclosure.

In future evolved communication systems such as Beyond 5G (B5G) or 6G, a Distributed Multiple-Input Multiple-Output (Distributed MIMO, also referred to as distributed antenna system) scenario and/or a Massive Multiple-Input Multiple-Output (Massive MIMO, also referred to as large-scale antenna array system) scenario may also be included. In some cases, Distributed MIMO and/or Massive MIMO may also support Cell-free or UE-centric deployment scenarios. It should be understood that the above scenarios are also applicable to TN and/or NTN.

A terminal device mentioned in the embodiments of the present disclosure may refer to User Equipment (UE), an access terminal, a subscriber unit, a subscriber station, a mobile station, a mobile console, a remote station, a remote terminal, a mobile device, a wireless communication device, a user agent, or a user apparatus. Optionally, the terminal device 10 may also be a cellular phone, a cordless phone, a Session Initiation Protocol (SIP) phone, a Wireless Local Loop (WLL) station, a Personal Digital Assistant (PDA), a handheld device with a wireless communication function, a computing device or other processing device connected to a wireless modem, a vehicle-mounted device, a wearable device, a terminal device in a 5th Generation System (5GS), or a terminal device in a future evolved Public Land Mobile Network (PLMN), etc., which is not limited by the embodiments of the present disclosure. For convenience of description, the above-mentioned devices are collectively referred to as a terminal device. In the embodiments of the present disclosure, "terminal device" and "UE" are generally used interchangeably, but those skilled in the art may understand that the two terms may express the same meaning.

A network device mentioned in the embodiments of the present disclosure may be an access network device, which may be located on the ground or on a satellite. An access network device is a device deployed in an access network to provide a wireless communication function for a terminal device. The access network device may be of various types, such as macro base stations, micro base stations, relay stations, access points, and so on. In systems employing different radio access technologies, the name of a device having an access network device function may vary. For example, in a 5G NR system, it is referred to as a gNodeB or gNB. With the evolution of communication technologies, the name "access network device" may change. For convenience of description, in the embodiments of the present disclosure, the above apparatuses providing a wireless communication function for a terminal device are collectively referred to as access network devices. Optionally, a communication relationship may be established between a terminal device and a core network device via an access network device.

The "5G NR system" in the embodiments of the present disclosure may also be referred to as a 5G system or an NR system, which may be understood by those skilled in the art. The technical solutions described in the embodiments of the present disclosure may be applied to an LTE system, a 5G NR system, a subsequent evolved system of the 5G NR system (such as a B5G system or a 6G system), or other communication systems such as a Narrow Band Internet of Things (NB-IoT) system, which is not limited by the present disclosure.

In the embodiments of the present disclosure, a network device may serve a cell, and a terminal device may communicate with the network device by using transmission resources (for example, frequency domain resources, or spectrum resources) on a carrier used by the cell. The cell may be a cell corresponding to a network device (for example, a base station). The cell may belong to a macro base station or a base station corresponding to a small cell. The small cell herein may include: a Metro cell, a Micro cell, a Pico cell, a Femto cell, etc. These small cells are characterized by a small coverage area and low transmit power, and are suitable for providing high-rate data transmission services.

For uplink data transmission, a communication system generally supports the following two manners: 1. dynamic scheduling; 2. semi-persistent scheduling.

### 1. Dynamic scheduling

Dynamic scheduling refers to a manner in which a network device schedules uplink data transmission via Downlink Control Information (DCI). A terminal device receives downlink control information sent by the network device, and then transmits uplink data based on parameters in the downlink control information. The advantage of dynamic scheduling is that a scheduler determines transmission parameters according to a real-time traffic volume and a physical channel condition, resulting in high transmission efficiency.

### 2. UL Configured Grant (UL CG)

UL CG refers to a manner in which a network device schedules uplink data transmission via higher-layer signaling (such as Radio Resource Control (RRC) signaling). A terminal device receives higher-layer signaling (such as RRC signaling) sent by the network device, and transmits uplink data based on parameters in the higher-layer signaling. UL CG is an uplink data transmission manner of Semi-Persistent Scheduling (SPS). For data that arrives periodically with a constant traffic volume and in scenarios where transmission conditions are stable (for example, the terminal device does not move rapidly), using UL CG to schedule uplink data transmission can reduce downlink control signaling overhead and uplink transmission delay in the system.

In the following, a Physical Uplink Control Channel (PUCCH) in an NR system will be introduced and described.

A PUCCH in an NR system is used to transmit Uplink Control Information (UCI), including Hybrid Automatic Repeat request-Acknowledgement (HARQ-ACK), Scheduling Request (SR), Channel State Information (CSI), and combinations thereof.

The NR PUCCH is designed with high reliability, high flexibility, and high efficiency, and supports long PUCCH formats and short PUCCH formats. The short PUCCH occupies 1-2 symbols and includes PUCCH format 0 and PUCCH format 2. The long PUCCH occupies 4-14 symbols and includes PUCCH format 1, PUCCH format 3, and PUCCH format 4. The numbers of OFDM symbols occupied and the numbers of information bits carried by the above five PUCCH formats are shown in Table 1 below:

**Table 1**

| PUCCH format | Number of OFDM symbols | Number of bits |
|---|---|---|
| 0 | 1-2 | ≤2 |
| 1 | 4-14 | ≤2 |
| 2 | 1-2 | >2 |
| 3 | 4-14 | >2 |
| 4 | 4-14 | >2 |

PUCCH format 0/1 carries a small number of information bits, i.e., less than or equal to 2 bits; PUCCH format 2/3/4 may carry a large number of information bits, i.e., more than 2 bits. In this case, the information bits need to undergo an encoding process. When a UCI information length (which may include Cyclic Redundancy Check (CRC)) is 3-11 bits, channel coding of small block lengths, such as Reed Muller code, is used. When the UCI information length is greater than 11 bits, Polar Code encoding is used. Among them, PUCCH format 0/1/4 supports multi-user multiplexing capability.

Resource allocation for NR PUCCH is performed as follows: K PUCCH resource sets are configured, each resource set carrying a different range of numbers of UCI bits, where K is a positive integer. As shown in FIG. 4, four PUCCH resource sets are configured, namely Set 0, Set 1, Set 2, and Set 3. Set 0 carries UCI bits with a number less than or equal to 2 bits. Set 1 carries UCI bits with a number greater than 2 bits and less than or equal to N₂ bits. Set 2 carries UCI bits with a number greater than N₂ bits and less than or equal to N₃ bits. Set 3 carries UCI bits with a number greater than N₃ bits and less than or equal to 1706 bits, where N₂ > 2, N₃ < 1706, N₂ < N₃, and both N₂ and N₃ are positive integers. Each set may include the same or different PUCCH formats. A resource set is determined from the K resource sets according to the number of UCI bits to be transmitted. A PUCCH resource is then determined from the set according to an indication of DCI. This manner can support simultaneous inclusion of long PUCCH and short PUCCH in a same resource set, realizing dynamic switching between long and short PUCCHs. In addition, the numbers of long and short PUCCHs in each resource set are fully configured by a network device (e.g., a base station), providing more flexibility for configuration by the network device.

With the development of communication technologies, for example, in 6G Ultra Reliable Low Latency Communication (URLLC) services, a data volume per transmission is relatively small, but requirements for reliability and latency are extremely stringent, e.g., a latency requirement of 0.1 ms and a reliability requirement of 99.99999%. Moreover, such URLLC data packets arrive randomly in many cases. Existing data transmission manners suffer from the following shortcomings:
First, with a UL CG transmission manner, since transmission parameters are semi-statically configured, configurations tend to be conservative to guarantee transmission performance under worst-case conditions, resulting in low transmission efficiency and inapplicability to mobile conditions. Furthermore, to ensure low latency, a scheduling period is required to be configured to be very small, leading to resource waste; and
Second, with a dynamic scheduling manner, Physical Uplink Shared Channel (PUSCH) resources may be dynamically scheduled according to channel conditions and data packet sizes. However, PUSCH generally uses Low Density Parity Check Code (LDPC) encoding which provides lower reliability than Polar encoding for small data packets. In addition, PUSCH does not support spreading operations, and support for multi-user multiplexing depends entirely on a Multiple-Input Multiple-Output (MIMO) multi-antenna configuration, which presents high operational difficulty in terminal device pairing in practical applications.

Based on the above considerations, the present disclosure proposes a scheme for transmitting uplink data using an uplink control channel (e.g., PUCCH), intended to improve the reliability of small data transmission and the system efficiency.

Reference is made to FIG. 5, which shows a flowchart of a data transmission method provided by an embodiment of the present disclosure. The method may include the following steps:
Step 510: A terminal device transmits first uplink data and first uplink control information on a first channel, the first channel being a data channel or a control channel.

In some embodiments, information may be classified into the following two types: data information and control information. Data information may be embodied as a Transport Block (TB), a Protocol Data Unit (PDU), etc. Control information may be embodied as UCI, configuration information, grant information, etc. Control information may also be referred to as signaling information. Generally, control information has a smaller number of bits than data information.

In some embodiments, the first channel is a channel supporting carrying of control information. The first channel may be a control channel, which may be a control channel for uplink transmission and supports carrying of control information, and may be referred to as an uplink control channel. In some embodiments, the first channel is a PUCCH, which supports carrying of uplink control information. With the evolution of communication technologies, the name of the uplink control channel may change, e.g., it may no longer be called PUCCH but another name, which is not limited by the present disclosure.

In some embodiments, when the first channel is a PUCCH, the first channel may be restricted to constrained PUCCH formats. In some embodiments, the constrained PUCCH formats include at least one of the following: a PUCCH format using spread spectrum, or a PUCCH format carrying more than 2 bits. The reason is that PUCCH formats supporting spreading and carrying a large number of bits are more suitable for data transmission.

By transmitting uplink data on a control channel (which may be, but is not limited to, a PUCCH), characteristics of the control channel can be fully utilized, such as use of spread spectrum, adoption of Polar Code or channel coding of small block lengths, etc. For uplink data transmission, use of spread spectrum can improve multi-user multiplexing capability and uplink data transmission efficiency. In addition, the scheme adopting Polar Code or channel coding of small block lengths has advantages over LDPC coding for small-packet encoding.

In some embodiments, the first channel is a channel supporting carrying of data information. The first channel may be a data channel, which may be a data channel for uplink transmission and supports carrying of data information, and may be referred to as an uplink data channel. In some embodiments, the first channel is a PUSCH, which supports carrying of uplink data information. With the evolution of communication technologies, the name of the uplink data channel may change, e.g., it may no longer be called PUSCH but another name, which is not limited by the present disclosure.

In some embodiments, the first channel is a channel supporting carrying of data information and control information.

In some embodiments, the first channel is an extension or enhancement of an existing data channel, which not only supports carrying of data information but also extends or enhances the capability of carrying control information. In some embodiments, the first channel is a data channel having a first characteristic which may be a characteristic of a control channel. In some embodiments, the first channel is a PUSCH having the first characteristic, or referred to as an extended or enhanced PUSCH (PUSCH with spreading). In some embodiments, the first characteristic includes at least one of the following: use of spread spectrum, or adoption of Polar Code or channel coding of small block lengths.

In some embodiments, the first channel is an extension or enhancement of an existing control channel, which not only supports carrying of control information but also extends or enhances the capability of carrying data information. In some embodiments, the first channel is an extended or enhanced PUCCH (PUCCH with spreading).

In some embodiments, the first channel is a newly defined channel in a standard or protocol, which has the capability of supporting carrying of data information and control information and has the above first characteristic. The present disclosure does not limit the name of the first channel.

By extending or enhancing a data channel (which may be, but is not limited to, a PUSCH) to have characteristics of a control channel (which may be, but is not limited to, a PUCCH), such as use of spread spectrum, adoption of Polar code or channel coding of small block lengths, etc., uplink data transmission efficiency can be improved.

In some embodiments, the first uplink data is scheduled or configured, through first information, to be transmitted on a first data channel; and the first uplink control information is scheduled or configured, through second information, to be transmitted on a first control channel.

The first data channel may be any data channel. In some embodiments, the first data channel is a PUSCH. A network device may send first information to the terminal device, the first information being used to schedule or configure transmission of the first uplink data on the first data channel. Correspondingly, the terminal device receives the first information sent by the network device. In some embodiments, the first information is first control information, which is used to dynamically schedule transmission of the first uplink data on the first data channel. In some embodiments, the first control information may be DCI. In some embodiments, the first information is first configuration information, which is used to semi-statically configure transmission of the first uplink data on the first data channel. In some embodiments, the first configuration information may be RRC signaling.

The first control channel may be any control channel. In some embodiments, the first control channel is a PUCCH. A network device may send second information to the terminal device, the second information being used to schedule or configure transmission of the first uplink control information on the first control channel. Correspondingly, the terminal device receives the second information sent by the network device. In some embodiments, the second information is second control information, which is used to dynamically schedule transmission of the first uplink control information on the first control channel. In some embodiments, the second control information may be DCI. In some embodiments, the second information is second configuration information, which is used to semi-statically configure transmission of the first uplink control information on the first control channel. In some embodiments, the second configuration information may be RRC signaling.

The terminal device may determine one of the data channel and the control channel as the first channel in the following manners.

Manner 1: The first information includes a first indication field, and the first indication field is used to indicate that the first channel is one of the data channel and the control channel.

An explicit indication information, i.e., the first indication field, is included in the first information to indicate that the first channel is one of the data channel and the control channel.

In some embodiments, when the first indication field takes a first value, it indicates that the first channel is a data channel; when the first indication field takes a second value, it indicates that the first channel is a control channel, wherein the first value is different from the second value.

In some embodiments, the first indication field may be represented by 1 bit. For example, the first value is 1 and the second value is 0. When the first indication field is 1, it indicates that the first channel is a data channel; when the first indication field is 0, it indicates that the first channel is a control channel. As another example, the first value is 0 and the second value is 1. When the first indication field is 0, it indicates that the first channel is a data channel; when the first indication field is 1, it indicates that the first channel is a control channel.

Taking the data channel as PUSCH and the control channel as PUCCH as an example, values of the first indication field and corresponding indication results may be shown in Table 2 below:

**Table 2**

| First indication field | Indication result |
|---|---|
| 0 | First channel is PUSCH |
| 1 | First channel is PUCCH |

It should be noted that the above description uses numerical values 0 and 1 only as examples of the first value and the second value. The first value and the second value may also be distinguished using other non-numerical information. In some embodiments, the first value and the second value are distinguished using "enable" and "disable", which is not limited by the present disclosure. In addition, the first value and the second value appearing hereinafter may also refer to the above description, and will not be repeated.

According to Manner 1, the first information used for scheduling or configuring transmission of the first uplink data carries explicit indication information for indicating whether the first channel used for multiplexed transmission is a data channel or a control channel, so that a channel used for multiplexed transmission can be indicated in the information used for scheduling or configuring uplink data transmission.

Manner 2: The first information includes a first indication field, and the first indication field is configured to indicate whether multiplexing transmission of the first uplink data and uplink control information on a control channel is allowed.

The first information includes explicit indication information, i.e., the first indication field, to indicate whether multiplexing transmission of the first uplink data and uplink control information on a control channel is allowed.

In some embodiments, when the first indication field takes a first value, it indicates that multiplexing transmission of the first uplink data and uplink control information on a control channel is allowed; when the first indication field takes a second value, it indicates that multiplexing transmission of the first uplink data and uplink control information on a control channel is not allowed, wherein the first value is different from the second value.

In some embodiments, the first indication field may be represented by 1 bit. For example, the first value is 1 and the second value is 0. When the first indication field is 1, it indicates that multiplexing transmission of the first uplink data and uplink control information on a control channel is allowed; when the first indication field is 0, it indicates that multiplexing transmission of the first uplink data and uplink control information on a control channel is not allowed. As another example, the first value is 0 and the second value is 1. When the first indication field is 0, it indicates that multiplexing transmission of the first uplink data and uplink control information on a control channel is allowed; when the first indication field is 1, it indicates that multiplexing transmission of the first uplink data and uplink control information on a control channel is not allowed.

Taking the control channel as a PUCCH for example, values of the first indication field and corresponding indication results may be shown in Table 3 below:

**Table 3**

| First indication field | Indication result |
|---|---|
| 0 | Multiplexing transmission of the first uplink data and uplink control information on PUCCH is allowed |
| 1 | Multiplexing transmission of the first uplink data and uplink control information on PUCCH is not allowed |

According to Manner 2, the first information used for scheduling or configuring transmission of the first uplink data carries explicit indication information for indicating whether multiplexing transmission of the first uplink data and uplink control information on a control channel is allowed, so that whether to perform multiplexing transmission on a control channel can be indicated in the information used for scheduling or configuring uplink data transmission.

Manner 3: The first information includes a first indication field, and the first indication field is configured to indicate that the first uplink data and the uplink control information are transmitted in a multiplexed manner on a data channel or a control channel.

The first information includes explicit indication information, i.e., the first indication field, to indicate that the first uplink data and the uplink control information are transmitted in a multiplexed manner on a data channel or a control channel.

In some embodiments, when the first indication field takes a first value, it indicates that the first uplink data and the uplink control information are transmitted in a multiplexed manner on a data channel; when the first indication field takes a second value, it indicates that the first uplink data and the uplink control information are transmitted in a multiplexed manner on a control channel, wherein the first value is different from the second value.

In some embodiments, the first indication field may be represented by 1 bit. For example, the first value is 1 and the second value is 0. When the first indication field is 1, it indicates that the first uplink data and the uplink control information are transmitted in a multiplexed manner on a data channel; when the first indication field is 0, it indicates that the first uplink data and the uplink control information are transmitted in a multiplexed manner on a control channel. As another example, the first value is 0 and the second value is 1. When the first indication field is 0, it indicates that the first uplink data and the uplink control information are transmitted in a multiplexed manner on a data channel; when the first indication field is 1, it indicates that the first uplink data and the uplink control information are transmitted in a multiplexed manner on a control channel.

Taking the data channel as a PUSCH and the control channel as a PUCCH for example, values of the first indication field and corresponding indication results may be shown in Table 4 below:

**Table 4**

| First indication field | Indication result |
|---|---|
| 0 | The first uplink data and the uplink control information are transmitted in a multiplexed manner on PUSCH |
| 1 | The first uplink data and the uplink control information are transmitted in a multiplexed manner on PUCCH |

According to Manner 3, the first information used for scheduling or configuring transmission of the first uplink data carries explicit indication information for indicating whether the first uplink data and the uplink control information are transmitted in a multiplexed manner on a data channel or on a control channel, so that a channel used for multiplexed transmission can be indicated in the information used for scheduling or configuring uplink data transmission.

Manner 4: The first information includes a first indication field, and the first indication field is configured to indicate a multiplexing transmission manner of the first uplink data and the uplink control information, wherein the multiplexing transmission manner of the first uplink data and the uplink control information is related to at least one of the following: a channel type, a control channel type, and a type of the uplink control information.

The first information includes explicit indication information, i.e., the first indication field, to indicate the multiplexing transmission manner of the first uplink data and the uplink control information.

In some embodiments, the channel type is used to distinguish between a data channel and a control channel.

In some embodiments, the control channel type is used to distinguish between control channels of different formats. Control channels of different formats may be distinguished by a type of control information bearable in the control channel. For example, the type of control information includes Type 1, Type 2, and Type 3, and the control channel type includes two categories: a first category of control channel is configured to bear control information of Type 1 and Type 2, and a second category of control channel is configured to bear control information of Type 3. In some embodiments, the type of control information includes, but is not limited to, UCI, configuration information, grant information, and other types. For example, the type of control information includes Type 1, Type 2, and Type 3, where Type 1 is UCI, Type 2 is configuration information, and Type 3 is grant information, which is not limited by the present disclosure.

In some embodiments, the control channel type is used to distinguish between control channels bearing different numbers of bits. For example, the control channel type includes two categories: a first category of control channel is configured to bear control information with a number of bits less than or equal to n, and a second category of control channel is configured to bear control information with a number of bits greater than n, where n is an integer greater than 1.

In some embodiments, the control channel type is used to distinguish between control channels of different formats and to distinguish between control channels bearing different numbers of bits. For example, the type of control information includes Type 1, Type 2, and Type 3; and the control channel type includes four categories: a first category of control channel, which is configured to bear control information of Type 1 and Type 2 with a number of bits less than or equal to n; a second category of control channel, which is configured to bear control information of Type 1 and Type 2 with a number of bits greater than n; a third category of control channel, which is configured to bear control information of Type 3 with a number of bits less than or equal to n; and a fourth category of control channel, which is configured to bear control information of Type 3 with a number of bits greater than n, where n is an integer greater than 1.

In some embodiments, the type of the uplink control information may be distinguished according to content of the uplink control information, such as different types of uplink control information including Hybrid Automatic Repeat request-Acknowledgement (HARQ-ACK), Scheduling Request (SR), Channel State Information (CSI), and the like. In some embodiments, the type of the uplink control information may also be distinguished based on a data amount (also referred to as payload size) of the uplink control information. In the embodiments of the present disclosure, a basis for distinguishing the type of the uplink control information is not limited.

In some embodiments, the first indication field may be represented by N bits, where N is a positive integer, and the first indication field can indicate up to 2^{N} multiplexing transmission manners of the first uplink data and the uplink control information. For example, when N is equal to 1, the first indication information can indicate up to 2 multiplexing transmission manners. For example, when N is equal to 2, the first indication information can indicate up to 4 multiplexing transmission manners.

Taking the data channel as a PUSCH, the control channel as a PUCCH, and N equal to 2 as an example, the first indication field is configured to indicate a multiplexing transmission manner of the first uplink data and the uplink control information, wherein the manner is related to the channel type and the control channel type. Values of the first indication field and corresponding indication results may be shown in Table 5 below:

**Table 5**

| First indication field | Indication result |
|---|---|
| 00 | The first uplink data and the uplink control information are transmitted in a multiplexed manner on PUSCH |
| 01 | The first uplink data and the uplink control information are transmitted in a multiplexed manner on the first type of PUCCH |
| 10 | The first uplink data and the uplink control information are transmitted in a multiplexed manner on the second type of PUCCH |
| 11 | The first uplink data and the uplink control information are transmitted in a multiplexed manner on the second type of PUCCH |

The PUCCH of the first type, the second type, and the third type in Table 5 above represent three different control channel types.

Taking the data channel as a PUSCH, the control channel as a PUCCH, and N equal to 2 as an example, the first indication field is configured to indicate a multiplexing transmission manner of the first uplink data and the uplink control information, wherein the manner is related to the channel type and the type of the uplink control information. Values of the first indication field and corresponding indication results may be shown in Table 6 below:

**Table 6**

| First indication field | Indication result |
|---|---|
| 00 | The first uplink data and the uplink control information are transmitted in a multiplexed manner on PUSCH |
| 01 | The first uplink data and the first type of uplink control information are transmitted in a multiplexed manner on PUCCH |
| 10 | The first uplink data and the second type of uplink control information are transmitted in a multiplexed manner on PUCCH |
| 11 | The first uplink data and the third type of uplink control information are transmitted in a multiplexed manner on PUCCH |

The uplink control information of the first type, the second type, and the third type in Table 6 above represent three different types of uplink control information.

According to Manner 4, the first information used for scheduling or configuring transmission of the first uplink data carries explicit indication information for indicating a multiplexing transmission manner of the first uplink data and the uplink control information, so that a channel used for multiplexed transmission can be indicated in the information used for scheduling or configuring uplink data transmission.

In addition, in this manner, the first indication field may be used to indicate whether the first uplink data and the uplink control information are transmitted in a multiplexed manner on a same channel, and when the first uplink data and the uplink control information are transmitted in a multiplexed manner on a same channel, the first indication field is used to indicate the multiplexing transmission manner of the first uplink data and the uplink control information.

In some embodiments, when the first information includes the first indication field, it indicates that the first uplink data and the uplink control information are transmitted in a multiplexed manner on a same channel; when the first information does not include the first indication field, it indicates that the first uplink data and the uplink control information are not transmitted in a multiplexed manner on a same channel.

In some embodiments, when the first indication field included in the first indication information has a valid value, it indicates that the first uplink data and the uplink control information are transmitted in a multiplexed manner on a same channel; when the first indication field included in the first information has an invalid value, it indicates that the first uplink data and the uplink control information are not transmitted in a multiplexed manner on a same channel. The valid value and the invalid value may be specified by a protocol or configured by a network device, respectively, which is not limited by the present disclosure. Further, when the first indication field included in the first information has a valid value, the multiplexing transmission manner of the first uplink data and the uplink control information is determined according to the value of the first indication field.

Manner 5: The second information includes a second indication field, and the second indication field is configured to indicate that the first channel is one of the data channel and the control channel.

The second information includes explicit indication information, i.e., the second indication field, to indicate that the first channel is one of the data channel and the control channel.

In some embodiments, when the second indication field takes a first value, it indicates that the first channel is a data channel; when the second indication field takes a second value, it indicates that the first channel is a control channel, wherein the first value is different from the second value.

In some embodiments, the second indication field may be represented by 1 bit. For example, the first value is 1 and the second value is 0. When the second indication field is 1, it indicates that the first channel is a data channel; when the second indication field is 0, it indicates that the first channel is a control channel. As another example, the first value is 0 and the second value is 1. When the second indication field is 0, it indicates that the first channel is a data channel; when the second indication field is 1, it indicates that the first channel is a control channel.

Taking the data channel as a PUSCH and the control channel as a PUCCH for example, values of the second indication field and corresponding indication results may be shown in Table 7 below:

**Table 7**

| Second indication field | Indication result |
|---|---|
| 0 | First channel is PUSCH |
| 1 | First channel is PUCCH |

According to Manner 5, the second information used for scheduling or configuring transmission of the first uplink control information carries explicit indication information for indicating whether the first channel used for multiplexed transmission is a data channel or a control channel, so that a channel used for multiplexed transmission can be indicated in the information used for scheduling or configuring uplink control information transmission.

Manner 6: The second information includes a second indication field, and the second indication field is configured to indicate whether multiplexing transmission of the first uplink control information and uplink data on a control channel is allowed.

The second information includes explicit indication information, i.e., the second indication field, to indicate whether multiplexing transmission of the first uplink control information and uplink data on a control channel is allowed.

In some embodiments, when the second indication field takes a first value, it indicates that multiplexing transmission of the first uplink control information and uplink data on a control channel is allowed; when the second indication field takes a second value, it indicates that multiplexing transmission of the first uplink control information and uplink data on a control channel is not allowed, wherein the first value is different from the second value.

In some embodiments, the second indication field may be represented by 1 bit. For example, the first value is 1 and the second value is 0. When the second indication field is 1, it indicates that multiplexing transmission of the first uplink control information and uplink data on a control channel is allowed; when the second indication field is 0, it indicates that multiplexing transmission of the first uplink control information and uplink data on a control channel is not allowed. As another example, the first value is 0 and the second value is 1. When the second indication field is 0, it indicates that multiplexing transmission of the first uplink control information and uplink data on a control channel is allowed; when the second indication field is 1, it indicates that multiplexing transmission of the first uplink control information and uplink data on a control channel is not allowed.

Taking the control channel as a PUCCH for example, values of the second indication field and corresponding indication results may be shown in Table 8 below:

**Table 8**

| Second indication field | Indication result |
|---|---|
| 0 | Multiplexing transmission of the first uplink control information and uplink data on PUCCH is not allowed |
| 1 | Multiplexing transmission of the first uplink control information and uplink data on PUCCH is allowed |

According to Manner 6, the second information used for scheduling or configuring transmission of the first uplink control information carries explicit indication information for indicating whether multiplexing transmission of the first uplink control information and uplink data on a control channel is allowed, so that whether to perform multiplexing transmission on a control channel can be indicated in the information used for scheduling or configuring uplink control information transmission.

Manner 7: The second information includes a second indication field, and the second indication field is configured to indicate that the first uplink control information and uplink data are transmitted in a multiplexed manner on a data channel or a control channel.

The second information includes explicit indication information, i.e., the second indication field, to indicate that the first uplink control information and uplink data are transmitted in a multiplexed manner on a data channel or a control channel.

In some embodiments, when the second indication field takes a first value, it indicates that the first uplink control information and uplink data are transmitted in a multiplexed manner on a data channel; when the second indication field takes a second value, it indicates that the first uplink control information and uplink data are transmitted in a multiplexed manner on a control channel, wherein the first value is different from the second value.

In some embodiments, the second indication field may be represented by 1 bit. For example, the first value is 1 and the second value is 0. When the second indication field is 1, it indicates that the first uplink control information and uplink data are transmitted in a multiplexed manner on a data channel; when the second indication field is 0, it indicates that the first uplink control information and uplink data are transmitted in a multiplexed manner on a control channel. As another example, the first value is 0 and the second value is 1. When the second indication field is 0, it indicates that the first uplink control information and uplink data are transmitted in a multiplexed manner on a data channel; when the second indication field is 1, it indicates that the first uplink control information and uplink data are transmitted in a multiplexed manner on a control channel.

Taking the data channel as a PUSCH and the control channel as a PUCCH for example, values of the second indication field and corresponding indication results may be shown in Table 9 below:

**Table 9**

| Second indication field | Indication result |
|---|---|
| 0 | The first uplink control information and uplink data are transmitted in a multiplexed manner on PUSCH |
| 1 | The first uplink control information and uplink data are transmitted in a multiplexed manner on PUCCH |

According to Manner 7, the second information used for scheduling or configuring transmission of the first uplink control information carries explicit indication information for indicating whether the first uplink control information and uplink data are transmitted in a multiplexed manner on a data channel or on a control channel, so that a channel used for multiplexed transmission can be indicated in the information used for scheduling or configuring uplink control information transmission.

Manner 8: The second information includes a second indication field, and the second indication field is configured to indicate a multiplexing transmission manner of the first uplink control information and uplink data, wherein the multiplexing transmission manner of the first uplink control information and uplink data is related to at least one of the following: a channel type, or a type of the uplink data.

The second information includes explicit indication information, i.e., the second indication field, to indicate the multiplexing transmission manner of the first uplink control information and uplink data.

In some embodiments, the channel type is used to distinguish between a data channel and a control channel.

In some embodiments, the type of the uplink data may be distinguished based on a data amount of the uplink data, a scheduling manner of the uplink data (dynamic scheduling, configured grant), a configured grant index corresponding to the uplink data, a format of downlink control information scheduling the uplink data, a service type of the uplink data, etc., or may be determined based on a combination of the above distinguishing bases. In the embodiments of the present disclosure, a basis for distinguishing the type of the uplink data is not limited.

In some embodiments, the second indication field may be represented by N bits, where N is a positive integer, and the second indication field can indicate up to 2^{N} multiplexing transmission manners of the first uplink control information and uplink data. For example, when N is equal to 1, the second indication information can indicate up to 2 multiplexing transmission manners. For example, when N is equal to 2, the second indication information can indicate up to 4 multiplexing transmission manners.

Taking the data channel as a PUSCH, the control channel as a PUCCH, and N equal to 2 as an example, the second indication field is configured to indicate a multiplexing transmission manner of the first uplink control information and uplink data, wherein the manner is related to the channel type and the type of the uplink data. Values of the second indication field and corresponding indication results may be shown in Table 10 below:

**Table 10**

| Second indication field | Indication result |
|---|---|
| 00 | The first uplink control information and uplink data are transmitted in a multiplexed manner on PUSCH |
| 01 | The first uplink control information and the first type of uplink data are transmitted in a multiplexed manner on PUCCH |
| 10 | The first uplink control information and the second type of uplink data are transmitted in a multiplexed manner on PUCCH |
| 11 | The first uplink control information and the third type of uplink data are transmitted in a multiplexed manner on PUCCH |

The first type, the second type, and the third type of uplink data in Table 10 above represent three different types of uplink data.

According to Manner 8, the second information used for scheduling or configuring transmission of the first uplink control information carries explicit indication information for indicating a multiplexing transmission manner of the first uplink control information and uplink data, so that a channel used for multiplexed transmission can be indicated in the information used for scheduling or configuring uplink control information transmission.

In addition, in this manner, the second indication field may be used to indicate whether the first uplink control information and uplink data are transmitted in a multiplexed manner on a same channel, and when the first uplink control information and uplink data are transmitted in a multiplexed manner on a same channel, the second indication field is used to indicate the multiplexing transmission manner of the first uplink control information and uplink data.

In some embodiments, when the second information includes the second indication field, it indicates that the first uplink control information and uplink data are transmitted in a multiplexed manner on a same channel; when the second information does not include the second indication field, it indicates that the first uplink control information and uplink data are not transmitted in a multiplexed manner on a same channel.

In some embodiments, when the second indication field included in the second information has a valid value, it indicates that the first uplink control information and uplink data are transmitted in a multiplexed manner on a same channel; when the second indication field included in the second information has an invalid value, it indicates that the first uplink control information and uplink data are not transmitted in a multiplexed manner on a same channel. The valid value and the invalid value may be specified by a protocol or configured by a network device, which is not limited by the present disclosure. Further, when the second indication field included in the second information has a valid value, the multiplexing transmission manner of the first uplink control information and uplink data is determined according to the value of the second indication field.

In Manners 1 to 8 above, one of the data channel and the control channel is determined as the first channel based on the first indication field in the first information or the second indication field in the second information. Such an implementation is relatively flexible and can cover a plurality of conditions such as different Transport Block Sizes (TBS), different types of uplink control information, different PUCCH formats, and the like.

Manner 9: One of a data channel and a control channel is determined as the first channel based on a data amount of the first uplink data. The terminal device determines one of the data channel and the control channel as the first channel based on the data amount of the first uplink data.

In some embodiments, when the data amount of the first uplink data is less than or equal to a first threshold, the control channel is determined as the first channel; and/or when the data amount of the first uplink data is greater than the first threshold, the data channel is determined as the first channel.

In some embodiments, when the data amount of the first uplink data is less than the first threshold, the control channel is determined as the first channel; and/or when the data amount of the first uplink data is greater than or equal to the first threshold, the data channel is determined as the first channel.

The data amount of the first uplink data may be represented by a Transport Block Size (TBS). The first threshold may be agreed upon by a protocol, configured by a network device, or dependent on implementation of the terminal device, which is not limited by the present disclosure.

According to Manner 9, a channel used for multiplexing transmission of the first uplink data and uplink control information may be determined based on the data amount of the first uplink data to be transmitted. A data channel may be selected when the data amount is large, and a control channel may be selected when the data amount is small, so as to fully utilize performances of different channels and improve transmission effect of uplink data.

Manner 10: One of a data channel and a control channel is determined as the first channel according to the first uplink control information. The terminal device determines one of the data channel and the control channel as the first channel according to the first uplink control information.

In some embodiments, the terminal device may determine one of the data channel and the control channel as the first channel according to a type of the first uplink control information. The type of the first uplink control information may be distinguished according to content of the first uplink control information, such as different types of first uplink control information including HARQ-ACK, SR, CSI, and the like. In some embodiments, when the type of the first uplink control information is Type 1, the data channel is used as the first channel; when the type of the first uplink control information is Type 2, the control channel is used as the first channel; Type 1 and Type 2 are two different types. In some embodiments, when the type of the first uplink control information is Type 1, the control channel is used as the first channel; otherwise (i.e., the type of the first uplink control information is not Type 1), the data channel is used as the first channel.

In some embodiments, the terminal device may determine one of the data channel and the control channel as the first channel based on a data amount of the first uplink control information. In some embodiments, when the data amount of the first uplink control information is greater than or equal to a second threshold, the data channel is used as the first channel; when the data amount of the first uplink control information is less than the second threshold, the control channel is used as the first channel. In some embodiments, when the data amount of the first uplink control information is greater than the second threshold, the data channel is used as the first channel; when the data amount of the first uplink control information is less than or equal to the second threshold, the control channel is used as the first channel.

In some embodiments, the terminal device may determine one of the data channel and the control channel as the first channel according to the type and data amount of the first uplink control information. In some embodiments, when the type of the first uplink control information is Type 1 and the data amount of the first uplink control information is less than or equal to the second threshold, the control channel is used as the first channel; otherwise (i.e., the type of the first uplink control information is not Type 1 and/or the data amount of the first uplink control information is greater than the second threshold), the data channel is used as the first channel.

The second threshold may be agreed upon by a protocol, configured by a network device, or dependent on implementation of the terminal device, which is not limited by the present disclosure.

According to Manner 10, a channel used for multiplexing transmission of the first uplink control information and uplink data may be determined according to the type and/or data amount of the first uplink control information to be transmitted, so as to fully utilize performances of different channels and help ensure uplink transmission performance.

Manner 11: One of a data channel and a control channel is determined as the first channel based on a sum of the data amount of the first uplink data and the data amount of the first uplink control information. The terminal device determines one of the data channel and the control channel as the first channel based on the sum of the data amount of the first uplink data and the data amount of the first uplink control information.

In some embodiments, the sum of the data amount of the first uplink data and the data amount of the first uplink control information may also be referred to as a total data amount of the first uplink data and the first uplink control information.

In some embodiments, when the total data amount of the first uplink data and the first uplink control information is greater than a third threshold, the data channel is used as the first channel; when the total data amount of the first uplink data and the first uplink control information is less than or equal to the third threshold, the control channel is used as the first channel.

In some embodiments, when the total data amount of the first uplink data and the first uplink control information is greater than or equal to the third threshold, the data channel is used as the first channel; when the total data amount of the first uplink data and the first uplink control information is less than the third threshold, the control channel is used as the first channel.

The third threshold may be agreed upon by a protocol, configured by a network device, or dependent on implementation of the terminal device, which is not limited by the present disclosure.

According to Manner 11, a channel used for multiplexing transmission of the first uplink data and the first uplink control information may be determined based on the sum of the data amount of the first uplink data and the data amount of the first uplink control information. A data channel may be selected when the sum of data amounts is large, and a control channel may be selected when the sum of data amounts is small, so as to fully utilize performances of different channels and improve transmission effect of uplink data.

Manner 12: One of a data channel and a control channel is determined as the first channel according to a format and/or resources of a first uplink control channel. The terminal device determines one of the data channel and the control channel as the first channel according to the format and/or resources of the first control channel. The first control channel is scheduled or configured to transmit the first uplink control information.

In some embodiments, when the format and/or resources of the first control channel can bear data information, the control channel is used as the first channel. In this case, the first channel may be the first control channel or another control channel different from the first control channel. When the format and/or resources of the first control channel cannot bear data information, the data channel is used as the first channel. The format and/or resources of the control channel that can/cannot bear data information may be agreed upon by a protocol, configured by a network device, or dependent on implementation of the terminal device, which is not limited by the present disclosure.

According to Manner 12, a channel used for multiplexing transmission of the first uplink control information and uplink data may be determined according to the format and/or resources of the first uplink control channel, so as to accurately select an appropriate uplink channel as the channel for multiplexing transmission and help ensure uplink transmission performance.

In Manners 9 to 12 above, one of the data channel and the control channel is determined as the first channel based on an agreed manner, which helps reduce overhead of control information/configuration information.

It should be understood that, among Manners 1 to 12 described above, one manner may be selected to determine one of the data channel and the control channel as the first channel, or a combination of two or more of the manners may be adopted to determine one of the data channel and the control channel as the first channel.

In some embodiments, Manner 2 and Manner 4 are combined. The first information includes a first indication field, and the first indication field is configured to indicate whether multiplexing transmission of the first uplink data and uplink control information on a control channel is allowed. When the first indication field indicates that multiplexing transmission of the first uplink data and uplink control information on a control channel is allowed, the first indication field is configured to indicate a multiplexing transmission manner of the first uplink data and uplink control information, wherein the multiplexing transmission manner of the first uplink data and uplink control information is related to at least one of the following: a control channel type, or a type of control information.

In some embodiments, Manner 6 and Manner 8 are combined. The second information includes a second indication field, and the second indication field is configured to indicate whether multiplexing transmission of the first uplink control information and uplink data on a control channel is allowed. When the second indication field indicates that multiplexing transmission of the first uplink control information and uplink data on a control channel is allowed, the second indication field is further configured to indicate a multiplexing transmission manner of the first uplink control information and uplink data, wherein the multiplexing transmission manner of the first uplink control information and uplink data is related to a type of uplink data.

In some embodiments, one of Manners 9 to 12 is combined with Manner 4 or Manner 8. Taking a combination of Manner 9 and Manner 4 as an example, one of the data channel and the control channel is determined as the first channel based on a data amount of the first uplink data. The terminal device may determine one of the data channel and the control channel as the first channel based on the data amount of the first uplink data. When the terminal device determines the control channel as the first channel, the terminal device may determine, according to the first indication field in the first information, a multiplexing transmission manner of the first uplink data and uplink control information, wherein the multiplexing transmission manner of the first uplink data and uplink control information is related to at least one of the following: a control channel type, or a type of control information.

It should be understood that, in addition to the manners of determining one of the data channel and the control channel as the first channel described above, other manners may also be adopted to determine the first channel, which is not limited by the present disclosure.

In some embodiments, when a first control channel and a first data channel satisfy a first condition, the terminal device may transmit first uplink data and first uplink control information on the first channel. The first control channel is scheduled or configured to transmit the first uplink control information, and the first data channel is scheduled or configured to transmit the first uplink data. The first condition includes at least one of the following: the first control channel and the first data channel overlap in a time domain, or the first control channel and the first data channel are in a same time domain unit. In some embodiments, the time domain unit may be, but is not limited to, any one of the following: a slot, a sub-slot, a symbol group, and the like.

When the first control channel and the first data channel satisfy the first condition, the terminal device may transmit the first uplink data and the first uplink control information in a multiplexed manner on a same channel (i.e., the first channel). It can be seen from the first condition that when the first control channel and the first data channel overlap or are close to each other in the time domain, both may be transmitted in a multiplexed manner on a same channel (i.e., the first channel), so as to ensure that multiplexing transmission does not affect transmission latency of the uplink data and/or uplink control information.

In addition, when the control channel is used as the first channel, the first channel may be the first control channel or another control channel different from the first control channel. Similarly, when the data channel is used as the first channel, the first channel may be the first data channel or another data channel different from the first data channel, which is not limited by the present disclosure.

In some embodiments, when the first channel is a control channel, resources used by the first channel may be determined according to at least one of the following parameters: a data amount of the first uplink data, a data amount of the first uplink control information, a sum of the data amount of the first uplink data and the data amount of the first uplink control information, or a resource set of the control channel, first indication information. The first indication information is configured to indicate a resource index of the control channel. The resource index of the control channel may be a unified index regardless of resource sets of the control channel, or an index within a resource set of each control channel, which is not limited by the present disclosure.

In some embodiments, one resource set of the control channel may be determined from a plurality of configured resource sets of the control channel based on the sum of the data amount of the first uplink data and the data amount of the first uplink control information, and then resources of the control channel indicated by the index may be determined from the determined one resource set of the control channel according to the first indication information as resources used by the first channel.

In some embodiments, the first indication information is carried in third information, and the third information is a latest one received by the terminal device among a plurality of pieces of information for scheduling or configuring the first uplink data and/or the first uplink control information. In some embodiments, both the first information and the second information carry indication information for indicating a resource index of the control channel. If the terminal device receives the first information first and then the second information, the terminal device may determine resources used by the first channel according to the indication information for indicating the resource index of the control channel carried in the second information. If the terminal device receives the second information first and then the first information, the terminal device may determine resources used by the first channel according to the indication information for indicating the resource index of the control channel carried in the first information. In some scenarios, one piece of first information may schedule or configure transmission of one piece of first uplink data, or multiple pieces of first information may schedule or configure transmission of multiple pieces of first uplink data. Similarly, one piece of second information may schedule or configure transmission of one piece of first uplink control information, or multiple pieces of second information may schedule or configure transmission of multiple pieces of first uplink control information. After receiving one or more pieces of first information and one or more pieces of second information, the terminal device may determine a latest received piece of information, and determine resources used by the first channel according to indication information for indicating a resource index of the control channel carried in the determined information.

By determining resources used by the first channel in the above manner, the amount of used resources can be determined relatively accurately in combination with the data amount of information to be transmitted, thereby improving resource utilization.

In some embodiments, the data amount of the first uplink data includes the number of bits of the first uplink data itself. When there is check information corresponding to the first uplink data, the data amount of the first uplink data includes the number of bits of the first uplink data itself and the number of bits of the check information corresponding to the first uplink data. The check information may be CRC information or other forms of check information, which is not limited by the present disclosure.

In some embodiments, the data amount of the first uplink control information includes the number of bits of the first uplink control information itself. When there is check information corresponding to the first uplink control information, the data amount of the first uplink control information includes the number of bits of the first uplink control information itself and the number of bits of the check information corresponding to the first uplink control information. The check information may be CRC information or other forms of check information, which is not limited by the present disclosure. In addition, the data amount of the first uplink control information may be equivalently represented by a payload size of the first uplink control information.

In the following, an encoding manner when the first uplink data and the first uplink control information are transmitted in a multiplexed manner on a same channel will be described.

In some embodiments, the first uplink data and the first uplink control information may be jointly encoded. In some embodiments, the first uplink data and the first uplink control information may be concatenated and then jointly encoded. The first uplink data may be appended after the first uplink control information, or the first uplink control information may be appended after the first uplink data. The first uplink data and the first uplink control information are concatenated to obtain combined information. After entering an encoder, the combined information is subjected to operations such as check information addition, segmentation, encoding, rate matching, and the like, and finally transmitted through the first channel.

In some embodiments, Polar code or channel coding of small block lengths, such as Reed Muller code, is adopted for encoding the above combined information. For uplink transmission with a small data amount, the scheme adopting the Polar Code or the channel coding of small block lengths provides better performance than an LDPC code.

In some embodiments, a total data amount of the first uplink data and the first uplink control information does not exceed a fourth threshold. In some embodiments, the fourth threshold is 1706 bits. The fourth threshold may be agreed upon by a protocol, configured by a network device, or dependent on implementation of the terminal device, which is not limited by the present disclosure.

In some embodiments, when the total data amount of the first uplink data and the first uplink control information does not exceed the fourth threshold, the first uplink data and the first uplink control information are jointly encoded. Otherwise, the first uplink data and the first uplink control information may be separately encoded.

When the first uplink data and the first uplink control information are transmitted in a multiplexed manner on a same channel, jointly encoding the first uplink data and the first uplink control information is relatively simple in implementation, but has relatively low encoding efficiency.

In some embodiments, the first uplink data and the first uplink control information are separately encoded. The first uplink data and the first uplink control information respectively enter corresponding encoders to be subjected to operations such as check information addition, segmentation, encoding, rate matching, and the like, so as to obtain encoded first uplink data and encoded first uplink control information. Then, the encoded first uplink data and the encoded first uplink control information are transmitted in a multiplexed manner on a same channel (i.e., the first channel).

In some embodiments, code rates corresponding to the first uplink data and the first uplink control information are respectively configured by a network device, and a total rate-matched output sequence length is determined according to the respective code rates and respective information bit numbers of the above two.

When the first uplink data and the first uplink control information are transmitted in a multiplexed manner on a same channel, separately encoding the first uplink data and the first uplink control information provides high encoding efficiency, but is more complex in implementation than joint encoding.

In the following, constraint conditions for transmitting the first uplink data and the first uplink control information in a multiplexed manner on a same channel will be described.

In some embodiments, there are at least two uplink channels overlapping in a time domain and/or in a same time domain unit. The at least two uplink channels include at least one first data channel and at least one first control channel. The first data channel is configured to transmit first uplink data, and the first control channel is configured to transmit first uplink control information. Constraint conditions for transmitting, on the first channel in a multiplexed manner, the first uplink data and the first uplink control information in the at least two uplink channels include Condition 1 and/or Condition 2 below.

Condition 1: A time interval between a time-domain start position of a first uplink channel and a time-domain end position of a first downlink channel is not less than a first duration. The first uplink channel is an uplink channel with an earliest start time among the at least two uplink channels. The first downlink channel is a downlink channel with a latest end time among downlink channels respectively corresponding to the at least two uplink channels. The first duration may be agreed upon by a protocol, configured by a network device, or dependent on implementation of the terminal device, which is not limited by the present disclosure.

In some embodiments, the downlink channel is a downlink control channel. Condition 1 may be: a time interval between a time-domain start position of a first uplink channel and a time-domain end position of a first downlink control channel is not less than a first duration. The first uplink channel is an uplink channel with an earliest start time among the at least two uplink channels. The first downlink control channel is a downlink control channel with a latest end time among downlink control channels respectively corresponding to the at least two uplink channels.

In some embodiments, "not less than the first duration" may be understood as "greater than or equal to the first duration". For example, the condition that the time interval between the time-domain start position of the first uplink channel and the time-domain end position of the first downlink control channel is not less than the first duration may be understood as: the time interval between the time-domain start position of the first uplink channel and the time-domain end position of the first downlink control channel is greater than or equal to the first duration.

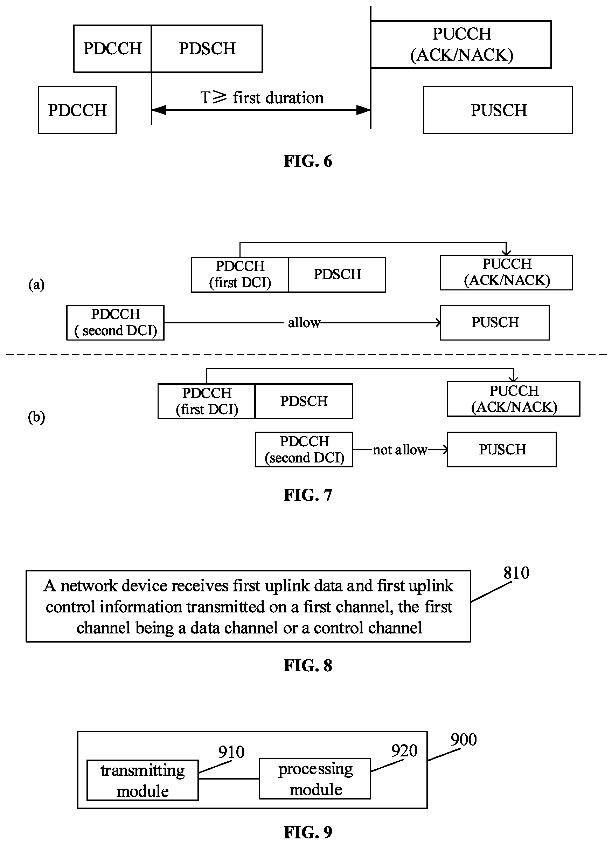

As shown in FIG. 6, there are two uplink channels: a PUCCH (for transmitting ACK/NACK corresponding to a PDSCH) and a PUSCH. The two uplink channels overlap in the time domain, and a start time of the PUCCH is earlier than a start time of the PUSCH. An end time of a PDCCH corresponding to the PUCCH is later than an end time of a PDCCH corresponding to the PUSCH. Condition 1 restricts that a time interval (denoted by T in the figure) between the time-domain start position of the PUCCH and the time-domain end position of the PDCCH corresponding to the PUCCH is greater than or equal to the first duration.

Condition 2: The terminal device detects first downlink control information configured to indicate a first control channel corresponding to first uplink control information, the terminal device does not expect second downlink control information to be detected after the first downlink control information, the second downlink control information is configured to schedule a first data channel, and the terminal device transmits the first uplink control information and first uplink data in the first data channel in a multiplexed manner.

As shown in FIG. 7, there are two uplink channels: a PUCCH (for transmitting ACK/NACK corresponding to a PDSCH) and a PUSCH. The two uplink channels overlap in the time domain. First downlink control information is configured to indicate the PUCCH, and second downlink control information is configured to schedule the PUSCH. As shown in sub-figure (a) of FIG. 7, the second downlink control information is received before the first downlink control information, and in this case, the terminal device is allowed to transmit information in the PUSCH and the PUCCH in a multiplexed manner on a same channel. As shown in sub-figure (b) of FIG. 7, the second downlink control information is received after the first downlink control information, and in this case, the terminal device is not allowed to transmit information in the PUSCH and the PUCCH in a multiplexed manner on a same channel.

In some embodiments, for Condition 2 above, if DCI scheduling a PDSCH/SPS PDSCH release is first detected by the terminal device, where the DCI indicates a PUCCH resource for HARQ-ACK corresponding to the PDSCH/SPS PDSCH release, the terminal device does not expect DCI scheduling a PUSCH to be detected thereafter, and the terminal device transmits uplink data carried in the PUSCH in a multiplexed manner on the PUCCH.

By setting Condition 1 above, it can be ensured that the terminal device has sufficient time to process uplink data. By setting Condition 2 above, it can be ensured that the terminal device has sufficient time to process uplink control information.

With the technical solutions provided by the embodiments of the present disclosure, by transmitting the first uplink data and the first uplink control information in a multiplexed manner on a same channel, which may be a data channel or a control channel, reliability and system efficiency of small data transmission can be improved.

Considering that there may be one or more first data channels and one or more first control channels, corresponding multiplexing manners for a case where one first data channel overlaps with a plurality of first control channels in the time domain, or for a case where one first control channel overlaps with a plurality of first data channels in the time domain, may be described as follows.

In some embodiments, when one first data channel overlaps with a plurality of first control channels in the time domain, first uplink control information scheduled or configured to be transmitted on a target control channel and first uplink data scheduled or configured to be transmitted on the first data channel are transmitted in a multiplexed manner on the first channel, where the target control channel is one of the plurality of first control channels.

When one first data channel overlaps with a plurality of first control channels in the time domain, one first control channel is selected from the plurality of first control channels as the target control channel, and first uplink control information to be transmitted on the target control channel is transmitted in a multiplexed manner with the first uplink data on the first channel.

In some embodiments, the plurality of first control channels do not overlap with each other in the time domain. When one first data channel overlaps with a plurality of first control channels in the time domain and the plurality of first control channels do not overlap with each other in the time domain, one first control channel is selected from the plurality of first control channels as the target control channel, and first uplink control information to be transmitted on the target control channel is transmitted in a multiplexed manner with the first uplink data on the first channel.

Assuming that the first data channel is PUSCH 1 and there are two first control channels, namely PUCCH 1 and PUCCH 2, when PUSCH 1 overlaps with PUCCH 1 in the time domain, PUSCH 1 overlaps with PUCCH 2 in the time domain, and PUCCH 1 and PUCCH 2 do not overlap in the time domain, the terminal device may select one PUCCH from PUCCH 1 and PUCCH 2, and transmit first uplink control information scheduled or configured to be transmitted on the selected PUCCH in a multiplexed manner with first uplink data scheduled or configured to be transmitted on PUSCH 1 on the first channel.

In some embodiments, the target control channel is one of:
a first control channel with an earliest start time among the plurality of first control channels;
a first control channel with an earliest end time among the plurality of first control channels;
a first control channel corresponding to a smallest serving cell index among the plurality of first control channels; and
a first control channel corresponding to a largest serving cell index among the plurality of first control channels.

In some embodiments, when there are multiple first control channels with an earliest start time or an earliest end time among the plurality of first control channels, a first control channel corresponding to a smallest or largest serving cell index is selected from the plurality of first control channels with an earliest start time or an earliest end time as the target control channel.

In some embodiments, when one first data channel overlaps with a plurality of first control channels in the time domain and the plurality of first control channels overlap with each other in the time domain, first uplink control information scheduled or configured to be transmitted on the plurality of first control channels and first uplink data scheduled or configured to be transmitted on the first data channel are transmitted in a multiplexed manner on the first channel.

Assuming that the first data channel is PUSCH 1 and there are two first control channels, namely PUCCH 1 and PUCCH 2, when PUSCH 1 overlaps with PUCCH 1 in the time domain, PUSCH 1 overlaps with PUCCH 2 in the time domain, and PUCCH 1 and PUCCH 2 also overlap in the time domain, the terminal device may transmit first uplink control information scheduled or configured to be transmitted on PUCCH 1, first uplink control information scheduled or configured to be transmitted on PUCCH 2, and first uplink data scheduled or configured to be transmitted on PUSCH 1 in a multiplexed manner on the first channel.

In some embodiments, when one first control channel overlaps with a plurality of first data channels in the time domain, first uplink data scheduled or configured to be transmitted on the plurality of first data channels and first uplink control information scheduled or configured to be transmitted on the first control channel are transmitted in a multiplexed manner on the first channel. In some embodiments, the first channel is a control channel, for example, the first channel may be the first control channel or another control channel other than the first control channel.

Assuming that the first control channel is PUCCH 1 and there are two first data channels, namely PUSCH 1 and PUSCH 2, when PUCCH 1 overlaps with PUSCH 1 in the time domain and PUCCH 1 overlaps with PUSCH 2 in the time domain, the terminal device may transmit first uplink control information scheduled or configured to be transmitted on PUCCH 1, first uplink data scheduled or configured to be transmitted on PUSCH 1, and first uplink data scheduled or configured to be transmitted on PUSCH 2 in a multiplexed manner on the first channel. The first channel may be PUCCH 1 or PUCCH 2, where PUCCH 2 is another control channel different from PUCCH 1.

In some embodiments, when a total data amount of first uplink data scheduled or configured to be transmitted on a plurality of first data channels and first uplink control information scheduled or configured to be transmitted on a first control channel is greater than a maximum bearable capacity of the first channel, the first uplink data scheduled or configured to be transmitted on the plurality of first data channels are dropped according to priorities.

Assuming that the first control channel is PUCCH 1 and there are three first data channels, namely PUSCH 1, PUSCH 2 and PUSCH 3, when PUCCH 1 overlaps with PUSCH 1, PUSCH 2 and PUSCH 3 respectively in the time domain, if a total data amount of first uplink control information scheduled or configured to be transmitted on PUCCH 1 and first uplink data respectively scheduled or configured to be transmitted on PUSCH 1, PUSCH 2 and PUSCH 3 is greater than a maximum bearable capacity of the first channel, the first uplink data of the three PUSCHs are dropped according to priorities. Assuming that priorities of PUSCH 1, PUSCH 2 and PUSCH 3 in descending order are PUSCH 2, PUSCH 1 and PUSCH 3, the terminal device may preferentially drop transmission of first uplink data on PUSCH 3; if a total data amount of first uplink control information scheduled or configured to be transmitted on PUCCH 1 and first uplink data respectively scheduled or configured to be transmitted on PUSCH 1 and PUSCH 2 is less than or equal to the maximum bearable capacity of the first channel, the first uplink control information scheduled or configured to be transmitted on PUCCH 1 and the first uplink data respectively scheduled or configured to be transmitted on PUSCH 1 and PUSCH 2 are transmitted in a multiplexed manner on the first channel. The first channel may be PUCCH 1 or PUCCH 2, where PUCCH 2 is another control channel different from PUCCH 1.

In addition, the priority of the first uplink data may be set in combination with factors such as a service type and a delay requirement, which is not limited in the present disclosure.

In some embodiments, when one first control channel overlaps with a plurality of first data channels in the time domain, first uplink data scheduled or configured to be transmitted on a target data channel and first uplink control information scheduled or configured to be transmitted on the first control channel are transmitted in a multiplexed manner on the first channel, where the target data channel is one of the plurality of first data channels.

When one first control channel overlaps with a plurality of first data channels in the time domain, one first data channel is selected from the plurality of first data channels as the target data channel, and first uplink data to be transmitted on the target data channel is transmitted in a multiplexed manner with the first uplink control information on the first channel.

Assuming that the first control channel is PUCCH 1 and there are two first data channels, namely PUSCH 1 and PUSCH 2, when PUCCH 1 overlaps with PUSCH 1 in the time domain and PUCCH 1 overlaps with PUSCH 2 in the time domain, the terminal device may select one PUSCH from PUSCH 1 and PUSCH 2, and transmit first uplink data scheduled or configured to be transmitted on the selected PUSCH in a multiplexed manner with first uplink control information scheduled or configured to be transmitted on PUCCH 1 on the first channel.

In some embodiments, the first channel is the target data channel. When one first control channel overlaps with a plurality of first data channels in the time domain, first uplink data scheduled or configured to be transmitted on the target data channel and first uplink control information scheduled or configured to be transmitted on the first control channel are transmitted in a multiplexed manner on the target data channel, where the target data channel is one of the plurality of first data channels.

In some embodiments, the target data channel is one of:
a first data channel with an earliest start time among the plurality of first data channels;
a first data channel with an earliest end time among the plurality of first data channels;
a first data channel occupying a largest number of time domain units among the plurality of first data channels;
a first data channel occupying a largest number of resource units among the plurality of first data channels;
a first data channel corresponding to a smallest serving cell index among the plurality of first data channels; and
a first data channel corresponding to a largest serving cell index among the plurality of first data channels.

In some embodiments, when one first data channel cannot be uniquely determined based on one of a start time, an end time, a number of occupied time domain units, a number of occupied resource units, and a serving cell index, one first data channel may be further uniquely determined in combination with other factors.

For example, when there are multiple first data channels with an earliest start time or an earliest end time among the plurality of first data channels, a first data channel corresponding to a smallest or largest serving cell index is selected from the plurality of first data channels with an earliest start time or an earliest end time as the target data channel.

For example, when there are multiple first data channels with an earliest start time or an earliest end time among the plurality of first data channels, a first data channel occupying a largest number of time domain units or a largest number of resource units is selected from the plurality of first data channels with an earliest start time or an earliest end time as the target data channel.

For example, when there are multiple first data channels occupying a largest number of time domain units or a largest number of resource units among the plurality of first data channels, a first data channel corresponding to a smallest or largest serving cell index is selected from the plurality of first data channels occupying a largest number of time domain units or a largest number of resource units as the target data channel.

The above embodiments provide corresponding multiplexing manners for a case where one first data channel overlaps with a plurality of first control channels in the time domain, or for a case where one first control channel overlaps with a plurality of first data channels in the time domain, so that in the above cases, first uplink data and first uplink control information suitable for multiplexing are transmitted in a multiplexed manner on a same channel, so as to improve reliability and system efficiency of small data transmission.

Reference is made to FIG. 8, which shows a flowchart of a data transmission method provided by another embodiment of the present disclosure. The method may be performed by a network device. The method may include the following steps:
Step 810: A network device receives first uplink data and first uplink control information transmitted on a first channel, the first channel being a data channel or a control channel.

In some embodiments, the first uplink data is scheduled or configured to be transmitted on a first data channel through first information, and the first uplink control information is scheduled or configured to be transmitted on a first control channel through second information.

In some embodiments, the first information includes a first indication field, and the first indication field is configured to indicate that the first channel is one of the data channel and the control channel.

In some embodiments, the first information includes a first indication field, and the first indication field is configured to indicate whether multiplexing transmission of the first uplink data and uplink control information on a control channel is allowed; or the first indication field is configured to indicate that the first uplink data and uplink control information are transmitted in a multiplexed manner on a data channel or a control channel.

In some embodiments, the first information includes a first indication field, and the first indication field is configured to indicate a multiplexing transmission manner of the first uplink data and uplink control information, where the multiplexing transmission manner is related to at least one of the following: a channel type, a control channel type, or a type of uplink control information.

In some embodiments, the control channel type is used to distinguish control channels of different formats; and/or the control channel type is used to distinguish control channels bearing different numbers of bits.

In some embodiments, the second information includes a second indication field, and the second indication field is configured to indicate that the first channel is one of the data channel and the control channel.

In some embodiments, the second information includes a second indication field, and the second indication field is configured to indicate whether multiplexing transmission of the first uplink control information and uplink data on a control channel is allowed; or the second indication field is configured to indicate that the first uplink control information and uplink data are transmitted in a multiplexed manner on a data channel or a control channel.

In some embodiments, the second information includes a second indication field, and the second indication field is configured to indicate a multiplexing transmission manner of the first uplink control information and uplink data, where the manner is related to at least one of the following: a channel type, or a type of uplink data.

In some embodiments, the channel type is used to distinguish between a data channel and a control channel.

In some embodiments, one of the data channel and the control channel is determined as the first channel based on a data amount of the first uplink data.

In some embodiments, when a data amount of the first uplink data is less than or equal to a first threshold, the control channel is used as the first channel; and/or when the data amount of the first uplink data is greater than the first threshold, the data channel is used as the first channel.

In some embodiments, when the data amount of the first uplink data is less than the first threshold, the control channel is used as the first channel; and/or when the data amount of the first uplink data is greater than or equal to the first threshold, the data channel is used as the first channel.

In some embodiments, one of the data channel and the control channel is determined as the first channel according to the first uplink control information.

In some embodiments, one of the data channel and the control channel is determined as the first channel according to a type and/or a data amount of the first uplink control information.

In some embodiments, one of the data channel and the control channel is determined as the first channel based on a sum of a data amount of the first uplink data and a data amount of the first uplink control information.

In some embodiments, one of the data channel and the control channel is determined as the first channel according to a format and/or resources of a first control channel; where the first control channel is scheduled or configured to transmit the first uplink control information.

In some embodiments, when a first control channel and a first data channel satisfy a first condition, the network device may receive first uplink data and first uplink control information transmitted on the first channel, where the first control channel is scheduled or configured to transmit the first uplink control information, the first data channel is scheduled or configured to transmit the first uplink data, and the first condition includes at least one of the following: the first control channel and the first data channel overlap in a time domain; or the first control channel and the first data channel are in a same time domain unit.

In some embodiments, when the first channel is a control channel, resources used by the first channel are determined according to at least one of the following parameters: a data amount of the first uplink data, a data amount of the first uplink control information, a sum of the data amount of the first uplink data and the data amount of the first uplink control information, a resource set of the control channel, or first indication information, where the first indication information is configured to indicate a resource index of the control channel.

In some embodiments, the first indication information is carried in third information, where the third information is a latest piece of information received by the terminal device among a plurality of pieces of information for scheduling or configuring the first uplink data and/or the first uplink control information.

In some embodiments, the first uplink data and the first uplink control information may be jointly encoded.

In some embodiments, the step 810 includes: decoding information carried and transmitted on the first channel to obtain the first uplink data and the first uplink control information.

In some embodiments, there are at least two uplink channels overlapping in a time domain and/or in a same time domain unit, where the at least two uplink channels include at least one first data channel and at least one first control channel, the first data channel is configured to transmit first uplink data, and the first control channel is configured to transmit first uplink control information.

Constraint conditions for transmitting, on the first channel in a multiplexed manner, the first uplink data and the first uplink control information in the at least two uplink channels include: a time interval between a time-domain start position of a first uplink channel and a time-domain end position of a first downlink channel is not less than a first duration, where the first uplink channel is an uplink channel with an earliest start time among the at least two uplink channels, and the first downlink channel is a downlink channel with a latest end time among downlink channels respectively corresponding to the at least two uplink channels; and/or second downlink control information is not expected to be detected by the terminal device after detection of first downlink control information, where the second downlink control information is configured to schedule the first data channel, the first downlink control information is configured to indicate the first control channel corresponding to the first uplink control information, and the first uplink control information and the first uplink data in the first data channel are transmitted in a multiplexed manner.

In some embodiments, when one first data channel overlaps with a plurality of first control channels in the time domain, the first channel is configured to transmit, in a multiplexed manner, first uplink control information scheduled or configured to be transmitted on a target control channel and first uplink data scheduled or configured to be transmitted on the first data channel, where the target control channel is one of the plurality of first control channels.

In some embodiments, the plurality of first control channels do not overlap with each other in the time domain.

In some embodiments, the target control channel is one of: a first control channel with an earliest start time among the plurality of first control channels; a first control channel with an earliest end time among the plurality of first control channels; a first control channel corresponding to a smallest serving cell index among the plurality of first control channels; and a first control channel corresponding to a largest serving cell index among the plurality of first control channels.

In some embodiments, when the plurality of first control channels overlap with each other in the time domain, the first channel is configured to transmit, in a multiplexed manner, first uplink control information scheduled or configured to be transmitted on the plurality of first control channels and first uplink data scheduled or configured to be transmitted on the first data channel.

For details not described in detail in the method embodiment on the network device side, reference may be made to the method embodiment on the terminal device side above. In addition, for technical effects achieved by the method embodiment on the network device side, reference may also be made to descriptions in the method embodiment on the terminal device side, which are similar.

With the technical solutions provided by the embodiments of the present disclosure, by receiving first uplink data and first uplink control information transmitted in a multiplexed manner on a same channel which may be a data channel or a control channel, reliability and system efficiency of small data transmission can be improved.

The following are apparatus embodiments of the present disclosure, which may be used to perform the method embodiments of the present disclosure. For details not disclosed in the apparatus embodiments of the present disclosure, reference may be made to the method embodiments of the present disclosure.

Reference is made to FIG. 9, which shows a block diagram of a data transmission apparatus provided by an embodiment of the present disclosure. The apparatus has a function of implementing the above example method on the terminal device side, and the function may be implemented by hardware or by hardware executing corresponding software. The apparatus may be the terminal device described above or may be disposed in the terminal device. As shown in FIG. 9, the apparatus 900 may include: a transmitting module 910.

The transmitting module 910 is configured to transmit first uplink data and first uplink control information on a first channel, where the first channel is a data channel or a control channel.

In some embodiments, the first uplink data is scheduled or configured to be transmitted on a first data channel through first information, and the first uplink control information is scheduled or configured to be transmitted on a first control channel through second information.

In some embodiments, the first information includes a first indication field, and the first indication field is configured to indicate that the first channel is one of the data channel and the control channel.

In some embodiments, the first information includes a first indication field, and the first indication field is configured to indicate whether multiplexing transmission of the first uplink data and uplink control information on the control channel is allowed; or the first indication field is configured to indicate that the first uplink data and uplink control information are transmitted in a multiplexed manner on the data channel or the control channel.

In some embodiments, the first information includes a first indication field, and the first indication field is configured to indicate a multiplexing transmission manner of the first uplink data and uplink control information; where the multiplexing transmission manner of the first uplink data and uplink control information is related to at least one of: a channel type, a control channel type, or a type of uplink control information.

In some embodiments, the control channel type is used to distinguish the control channels of different formats; and/or the control channel type is used to distinguish the control channels bearing different numbers of bits.

In some embodiments, the second information includes a second indication field, and the second indication field is configured to indicate that the first channel is one of the data channel and the control channel.

In some embodiments, the second information includes a second indication field, and the second indication field is configured to indicate whether multiplexing transmission of the first uplink control information and uplink data on the control channel is allowed; or the second indication field is configured to indicate that the first uplink control information and uplink data are transmitted in a multiplexed manner on the data channel or the control channel.

In some embodiments, the second information includes a second indication field, and the second indication field is configured to indicate a multiplexing transmission manner of the first uplink control information and uplink data, where the multiplexing transmission manner of the first uplink control information and uplink data is related to at least one of the following: a channel type and a type of the uplink data.

In some embodiments, the channel type is used to distinguish between the data channel and the control channel.

In some embodiments, as shown in FIG. 9, the apparatus 900 further includes a processing module 920 configured to determine one of the data channel and the control channel as the first channel based on a data amount of the first uplink data.

In some embodiments, the processing module 920 is configured to:
determine the control channel as the first channel when the data amount of the first uplink data is less than or equal to a first threshold, and/or determine the data channel as the first channel when the data amount of the first uplink data is greater than the first threshold; or
determine the control channel as the first channel when the data amount of the first uplink data is less than the first threshold, and/or determine the data channel as the first channel when the data amount of the first uplink data is greater than or equal to the first threshold.

In some embodiments, as shown in FIG. 9, the apparatus 900 further includes a processing module 920 configured to determine one of the data channel and the control channel as the first channel according to the first uplink control information.

In some embodiments, the processing module 920 is configured to determine one of the data channel and the control channel as the first channel according to a type and/or a data amount of the first uplink control information.

In some embodiments, as shown in FIG. 9, the apparatus 900 further includes a processing module 920 configured to determine one of the data channel and the control channel as the first channel based on a sum of a data amount of the first uplink data and a data amount of the first uplink control information.

In some embodiments, as shown in FIG. 9, the apparatus 900 further includes a processing module 920 configured to determine one of the data channel and the control channel as the first channel according to a format and/or resources of a first control channel; where the first control channel is scheduled or configured to transmit the first uplink control information.

In some embodiments, the transmitting module 910 is configured to transmit the first uplink data and the first uplink control information on the first channel when a first control channel and a first data channel satisfy a first condition.

The first control channel is scheduled or configured to transmit the first uplink control information, the first data channel is scheduled or configured to transmit the first uplink data, and the first condition includes at least one of the following:
the first control channel and the first data channel overlap in a time domain; or
the first control channel and the first data channel are in a same time domain unit.

In some embodiments, as shown in FIG. 9, the apparatus 900 further includes a processing module 920 configured to, when the first channel is the control channel, determine resources used by the first channel according to at least one of the following parameters: a data amount of the first uplink data, a data amount of the first uplink control information, a sum of the data amount of the first uplink data and the data amount of the first uplink control information, a resource set of the control channel, or first indication information, where the first indication information is configured to indicate a resource index of the control channel.

In some embodiments, the first indication information is carried in third information, where the third information is a latest piece of information received by the terminal device among a plurality of pieces of information for scheduling or configuring the first uplink data and/or the first uplink control information.

In some embodiments, the first uplink data and the first uplink control information may be jointly encoded.

In some embodiments, the case of jointly encoding the first uplink data and the first uplink control information may include that: the first uplink data and the first uplink control information are concatenated and then jointly encoded.

In some embodiments, there are at least two uplink channels overlapping in a time domain and/or in a same time domain unit, where the at least two uplink channels include at least one first data channel and at least one first control channel, the first data channel is configured to transmit the first uplink data, and the first control channel is configured to transmit the first uplink control information. Constraint conditions for transmitting, on the first channel in a multiplexed manner, the first uplink data and the first uplink control information in the at least two uplink channels include that: a time interval between a time-domain start position of a first uplink channel and a time-domain end position of a first downlink channel is not less than a first duration, where the first uplink channel is an uplink channel with an earliest start time among the at least two uplink channels, and the first downlink channel is a downlink channel with a latest end time among downlink channels respectively corresponding to the at least two uplink channels; and/or first downlink control information is detected by the terminal device configured to indicate the first control channel corresponding to the first uplink control information, the terminal device does not expect second downlink control information to be detected after the first downlink control information, the second downlink control information is configured to schedule the first data channel, and the terminal device transmits the first uplink control information and the first uplink data in the first data channel in a multiplexed manner.

In some embodiments, when one first data channel overlaps with a plurality of first control channels in the time domain, first uplink control information scheduled or configured to be transmitted on a target control channel and first uplink data scheduled or configured to be transmitted on the first data channel are transmitted in a multiplexed manner on the first channel, where the target control channel is one of the plurality of first control channels.

In some embodiments, the plurality of first control channels do not overlap with each other in the time domain.

In some embodiments, the target control channel is one of:
a first control channel with an earliest start time among the plurality of first control channels;
a first control channel with an earliest end time among the plurality of first control channels;
a first control channel corresponding to a smallest serving cell index among the plurality of first control channels; and
a first control channel corresponding to a largest serving cell index among the plurality of first control channels.

In some embodiments, when the plurality of first control channels overlap with each other in the time domain, first uplink control information scheduled or configured to be transmitted on the plurality of first control channels and first uplink data scheduled or configured to be transmitted on the first data channel are transmitted in a multiplexed manner on the first channel.

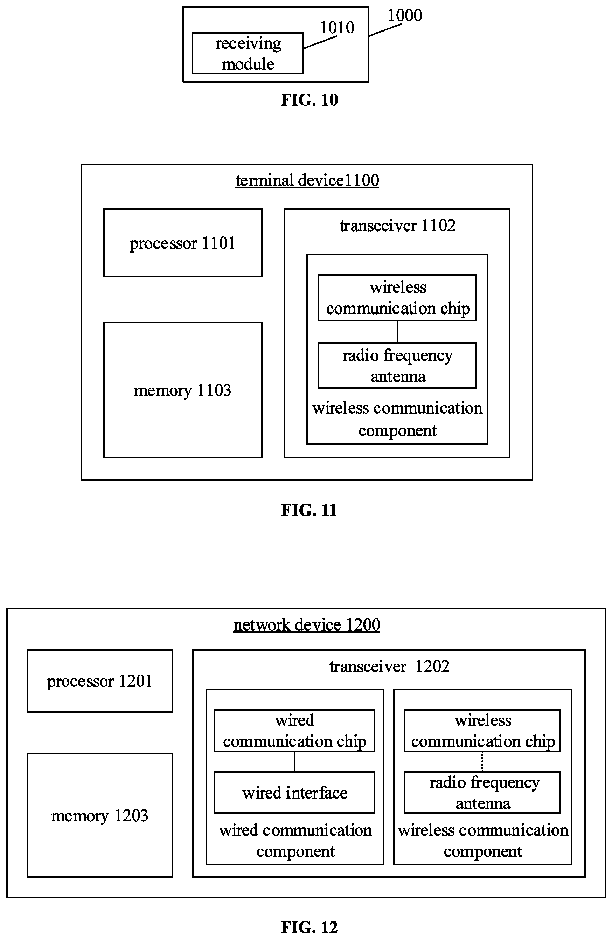

Reference is made to FIG. 10, which shows a block diagram of a data transmission apparatus provided by another embodiment of the present disclosure. The apparatus has a function of implementing the above example method on the network device side, and the function may be implemented by hardware or by hardware executing corresponding software. The apparatus may be the network device described above or may be disposed in the network device. As shown in FIG. 10, the apparatus 1000 may include: a receiving module 1010.

The receiving module 1010 is configured to receive first uplink data and first uplink control information transmitted on a first channel, where the first channel is a data channel or a control channel.

In some embodiments, the first uplink data is scheduled or configured to be transmitted on a first data channel through first information, and the first uplink control information is scheduled or configured to be transmitted on a first control channel through second information.

In some embodiments, the first information includes a first indication field, and the first indication field is configured to indicate that the first channel is one of the data channel and the control channel.

In some embodiments, the first information includes a first indication field, and the first indication field is configured to indicate whether multiplexing transmission of the first uplink data and uplink control information on the control channel is allowed; or the first indication field is configured to indicate that the first uplink data and uplink control information are transmitted in a multiplexed manner on the data channel or the control channel.

In some embodiments, the first information includes a first indication field, and the first indication field is configured to indicate a multiplexing transmission manner of the first uplink data and uplink control information; where the multiplexing transmission manner of the first uplink data and uplink control information is related to at least one of the following: a channel type, a control channel type, or a type of uplink control information.

In some embodiments, the control channel type is used to distinguish the control channels of different formats; and/or the control channel type is used to distinguish the control channels bearing different numbers of bits.

In some embodiments, the second information includes a second indication field, and the second indication field is configured to indicate that the first channel is one of the data channel and the control channel.

In some embodiments, the second information includes a second indication field, and the second indication field is configured to indicate whether multiplexing transmission of the first uplink control information and uplink data on the control channel is allowed; or the second indication field is configured to indicate that the first uplink control information and uplink data are transmitted in a multiplexed manner on the data channel or the control channel.

In some embodiments, the second information includes a second indication field, and the second indication field is configured to indicate a multiplexing transmission manner of the first uplink control information and uplink data, where the multiplexing transmission manner of the first uplink control information and uplink data is related to at least one of the following: a channel type, or a type of the uplink data.

In some embodiments, the channel type is used to distinguish between the data channel and the control channel.

In some embodiments, one of the data channel and the control channel is determined as the first channel based on the data amount of the first uplink data.

In some embodiments, when a data amount of the first uplink data is less than or equal to a first threshold, the control channel is used as the first channel; and/or when the data amount of the first uplink data is greater than the first threshold, the data channel is used as the first channel; or
when the data amount of the first uplink data is less than the first threshold, the control channel is used as the first channel; and/or when the data amount of the first uplink data is greater than or equal to the first threshold, the data channel is used as the first channel.

In some embodiments, one of the data channel and the control channel is determined as the first channel according to the first uplink control information.

In some embodiments, one of the data channel and the control channel is determined as the first channel according to a type and/or a data amount of the first uplink control information.

In some embodiments, one of the data channel and the control channel is determined as the first channel based on a sum of a data amount of the first uplink data and a data amount of the first uplink control information.

In some embodiments, one of the data channel and the control channel is determined as the first channel according to a format and/or resources of a first control channel; where the first control channel is scheduled or configured to transmit the first uplink control information.

In some embodiments, the receiving module 1010 is configured to receive the first uplink data and the first uplink control information transmitted on the first channel when a first control channel and a first data channel satisfy a first condition.

The first control channel is scheduled or configured to transmit the first uplink control information, the first data channel is scheduled or configured to transmit the first uplink data, and the first condition includes at least one of the following:
the first control channel and the first data channel overlap in a time domain; or
the first control channel and the first data channel are in a same time domain unit.

In some embodiments, when the first channel is the control channel, resources used by the first channel are determined according to at least one of the following parameters: a data amount of the first uplink data, a data amount of the first uplink control information, a sum of the data amount of the first uplink data and the data amount of the first uplink control information, a resource set of the control channel, or first indication information, where the first indication information is configured to indicate a resource index of the control channel.

In some embodiments, the first indication information is carried in third information, where the third information is a latest piece of information received by the terminal device among a plurality of pieces of information for scheduling or configuring the first uplink data and/or the first uplink control information.

In some embodiments, the first uplink data and the first uplink control information may be jointly encoded.

In some embodiments, the receiving module 1010 is configured to decode information carried and transmitted on the first channel to obtain the first uplink data and the first uplink control information.

In some embodiments, there are at least two uplink channels overlapping in a time domain and/or in a same time domain unit, where the at least two uplink channels include at least one first data channel and at least one first control channel, the first data channel is configured to transmit the first uplink data, and the first control channel is configured to transmit the first uplink control information;

Constraint conditions for transmitting, on the first channel in a multiplexed manner, the first uplink data and the first uplink control information in the at least two uplink channels include that: a time interval between a time-domain start position of a first uplink channel and a time-domain end position of a first downlink channel is not less than a first duration, where the first uplink channel is an uplink channel with an earliest start time among the at least two uplink channels, and the first downlink channel is a downlink channel with a latest end time among downlink channels respectively corresponding to the at least two uplink channels; and/or second downlink control information is not expected to be detected by the terminal device after detection of first downlink control information, where the second downlink control information is configured to schedule the first data channel, the first downlink control information is configured to indicate the first control channel corresponding to the first uplink control information, and the first uplink control information and the first uplink data in the first data channel are transmitted in a multiplexed manner.

In some embodiments, when one first data channel overlaps with a plurality of first control channels in the time domain, the first channel is configured to transmit, in a multiplexed manner, first uplink control information scheduled or configured to be transmitted on a target control channel and first uplink data scheduled or configured to be transmitted on the first data channel, where the target control channel is one of the plurality of first control channels.

In some embodiments, the plurality of first control channels do not overlap with each other in the time domain.

In some embodiments, the target control channel is one of:
a first control channel with an earliest start time among the plurality of first control channels;
a first control channel with an earliest end time among the plurality of first control channels;
a first control channel corresponding to a smallest serving cell index among the plurality of first control channels; and
a first control channel corresponding to a largest serving cell index among the plurality of first control channels.

In some embodiments, when the plurality of first control channels overlap with each other in the time domain, the first channel is configured to transmit, in a multiplexed manner, first uplink control information scheduled or configured to be transmitted on the plurality of first control channels and first uplink data scheduled or configured to be transmitted on the first data channel.

It should be noted that, when the apparatus provided by the above embodiments implements its functions, only the division of the above functional modules is taken as an example. In practical applications, the above functions may be allocated to and completed by different functional modules according to practical needs, that is, the content structure of the device is divided into different functional modules to complete all or part of the functions described above.

For specific manners in which the modules in the above embodiments perform operations, detailed descriptions have been given in the embodiments related to the methods, and detailed descriptions thereof are omitted herein.

Reference is made to FIG. 11, which shows a schematic structural diagram of a terminal device 1100 provided by an embodiment of the present disclosure. The terminal device 1100 may be configured to perform the method steps performed by the terminal device in the above embodiments. The terminal device 1100 may include: a processor 1101, a transceiver 1102, and a memory 1103. The transceiver 1102 is configured to implement a transmitting or receiving function, for example, to implement the function of the transmitting module 910. The processor 1101 may be configured to implement other processing functions or control transmitting and/or receiving, for example, to implement the function of the processing module 920.

The processor 1101 includes one or more processing cores, and is configured to execute various functional applications and information processing by running software programs and modules.

The transceiver 1102 may include a receiver and a transmitter. For example, the receiver and the transmitter may be implemented as a same wireless communication component, and the wireless communication component may include a wireless communication chip and a radio frequency antenna.

The memory 1103 may be connected to the processor 1101 and the transceiver 1102.

The memory 1103 may be configured to store a computer program executable by the processor, and the processor 1101 is configured to execute the computer program to implement each step performed by the terminal device in the above method embodiments.

In addition, the memory 1103 may be implemented by any type of volatile or non-volatile storage device or a combination thereof. Volatile or non-volatile storage devices include, but are not limited to: a magnetic disk or an optical disk, an electrically erasable programmable read-only memory, an erasable programmable read-only memory, a static random access memory, a read-only memory, a magnetic memory, a flash memory, and a programmable read-only memory.

In some embodiments, the transceiver 1102 is configured to transmit first uplink data and first uplink control information on a first channel, where the first channel is a data channel or a control channel.

For details not described in detail in the above embodiments, reference may be made to descriptions in the above method embodiments, and detailed descriptions thereof are omitted herein.

Reference is made to FIG. 12, which shows a schematic structural diagram of a network device 1200 provided by an embodiment of the present disclosure. The network device 1200 may be configured to perform the method steps performed by the network device in the above embodiments. The network device 1200 may include: a processor 1201, a transceiver 1202, and a memory 1203. The transceiver 1202 is configured to implement a transmitting or receiving function, for example, to implement the function of the receiving module 1010, and the processor 1201 may be configured to implement other processing functions or control transmitting and/or receiving.

The processor 1201 includes one or more processing cores, and is configured to execute various functional applications and information processing by running software programs and modules.

The transceiver 1202 may include a receiver and a transmitter. For example, the transceiver 1202 may include a wired communication component, and the wired communication component may include a wired communication chip and a wired interface (such as an optical fiber interface). Optionally, the transceiver 1202 may further include a wireless communication component, and the wireless communication component may include a wireless communication chip and a radio frequency antenna.

The memory 1203 may be connected to the processor 1201 and the transceiver 1202.

The memory 1203 may be configured to store a computer program executable by the processor, and the processor 1201 is configured to execute the computer program to implement each step performed by the network device in the above method embodiments.

In addition, the memory 1203 may be implemented by any type of volatile or non-volatile storage device or a combination thereof. Volatile or non-volatile storage devices include, but are not limited to: a magnetic disk or an optical disk, an electrically erasable programmable read-only memory, an erasable programmable read-only memory, a static random access memory, a read-only memory, a magnetic memory, a flash memory, and a programmable read-only memory.

In some embodiments, the transceiver 1202 is configured to receive first uplink data and first uplink control information transmitted on a first channel, where the first channel is a data channel or a control channel.

For details not described in detail in the present embodiment, reference may be made to the above embodiments, and detailed descriptions thereof are omitted herein.

Embodiments of the present disclosure further provide a computer-readable storage medium storing a computer program executable by a processor of a terminal device to implement the data transmission method on the terminal device side described above.

Embodiments of the present disclosure further provide a computer-readable storage medium storing a computer program executable by a processor of a network device to implement the data transmission method on the network device side described above.

In some embodiments, the computer-readable storage medium may include: ROM (Read-Only Memory), RAM (Random-Access Memory), SSD (Solid State Drives), an optical disk, or the like. The random-access memory may include ReRAM (Resistance Random Access Memory) and DRAM (Dynamic Random Access Memory).

Embodiments of the present disclosure further provide a chip including a programmable logic circuit and/or program instructions, which, when run on a terminal device, are configured to implement the data transmission method on the terminal device side described above.

Embodiments of the present disclosure further provide a chip including a programmable logic circuit and/or program instructions, which, when run on a network device, are configured to implement the data transmission method on the network device side described above.

Embodiments of the present disclosure further provide a computer program product or a computer program including computer instructions stored in a computer-readable storage medium. A processor of a terminal device may read and execute the computer instructions from the computer-readable storage medium to implement the data transmission method on the terminal device side described above.

Embodiments of the present disclosure further provide a computer program product or a computer program including computer instructions stored in a computer-readable storage medium. A processor of a network device may read and execute the computer instructions from the computer-readable storage medium to implement the data transmission method on the network device side described above.

It should be understood that "indication" mentioned in embodiments of the present disclosure may refer to direct indication, indirect indication, or representation of an association relationship. For example, A indicates B may mean that A directly indicates B, e.g., B may be obtained from A; or that A indirectly indicates B, e.g., A indicates C and B may be obtained from C; or that there is an association relationship between A and B.

In the description of embodiments of the present disclosure, the term "correspond" may indicate a direct or indirect correspondence between two entities, an association relationship therebetween, or a relationship of indicating and indicated, configuring and configured, or the like.

In some embodiments of the present disclosure, "predefined" may be implemented by pre-storing corresponding codes, tables, or other manners for indicating relevant information in a device (including, e.g., a terminal device and a network device), and the specific implementation manner is not limited in the present disclosure. For example, predefined may mean defined in a protocol.

In some embodiments of the present disclosure, the "protocol" may refer to a standard protocol in the communication field, including, e.g., an LTE protocol, an NR protocol, and related protocols applied to a future communication system, which is not limited in the present disclosure.

As used herein, "a plurality of" means two or more. "And/or" describes an association relationship between associated objects and may mean three relationships. For example, A and/or B may mean: A alone, both A and B, or B alone. The character "j" generally indicates an "or" relationship between associated objects.

In addition, step numbers described herein merely exemplarily show one possible execution order among steps. In some other embodiments, the above steps may also be executed not in the order of numbers, for example, two steps with different numbers are executed simultaneously, or two steps with different numbers are executed in a reverse order as illustrated, which is not limited in embodiments of the present disclosure.

It should be understood by those skilled in the art that functions described in embodiments of the present disclosure may be implemented in hardware, software, firmware, or any combination thereof in one or more of the above examples. When implemented in software, the functions may be stored on a computer-readable medium or transmitted as one or more instructions or code on a computer-readable medium. Computer-readable media include computer storage media and communication media including any medium that facilitates transfer of a computer program from one place to another. A storage medium may be any available medium that can be accessed by a general-purpose or special-purpose computer.

The above descriptions are merely exemplary embodiments of the present disclosure and are not intended to limit the present disclosure. Any modifications, equivalent replacements, improvements, or the like made within the spirit and principles of the present disclosure shall fall within the protection scope of the present disclosure.

## Claims

1. A data transmission method, performed by a terminal device, the method comprising:
transmitting first uplink data and first uplink control information on a first channel, wherein the first channel is a data channel or a control channel.

2. The method of claim 1, wherein the first uplink data is scheduled or configured through first information for transmission on a first data channel, and the first uplink control information is scheduled or configured through second information for transmission on a first control channel.

3. The method of claim 2, wherein the first information comprises a first indication field, and the first indication field is configured to indicate that the first channel is one of the data channel and the control channel.

4. The method of claim 2 or 3, wherein the first information comprises a first indication field,
wherein the first indication field is configured to indicate whether multiplexing transmission of the first uplink data and uplink control information on the control channel is allowed; or,
the first indication field is configured to indicate that the first uplink data and uplink control information are multiplexed on the data channel or the control channel.

5. The method of claim 2 or 3, wherein the first information comprises a first indication field, the first indication field is configured to indicate a multiplexing transmission manner of the first uplink data and uplink control information, and the multiplexing transmission manner of the first uplink data and uplink control information is related to at least one of: a channel type, a control channel type, and a type of uplink control information.

6. The method of claim 5, wherein
the control channel type is configured to distinguish between the control channels of different formats; and/or,
the control channel type is configured to distinguish between the control channels carrying different numbers of bits.

7. The method of claim 2, wherein the second information comprises a second indication field, and the second indication field is configured to indicate that the first channel is one of the data channel and the control channel.

8. The method of claim 2 or 7, wherein the second information comprises a second indication field,
wherein the second indication field is configured to indicate whether multiplexing transmission of the first uplink control information and uplink data on the control channel is allowed; or,
the second indication field is configured to indicate that the first uplink control information and uplink data are multiplexed on the data channel or the control channel.

9. The method of claim 2 or 7, wherein the second information comprises a second indication field, the second indication field is configured to indicate a multiplexing transmission manner of the first uplink control information and uplink data, and the multiplexing transmission manner of the first uplink control information and uplink data is related to at least one of: a channel type, or a type of the uplink data.

10. The method of claim 5 or 9, wherein the channel type is configured to distinguish between the data channel and the control channel.

11. The method of claim 1 or 2, further comprising:
determining one of the data channel and the control channel as the first channel based on a data amount of the first uplink data.

12. The method of claim 11, wherein the determining one of the data channel and the control channel as the first channel based on a data amount of the first uplink data comprises:
determining the control channel as the first channel when the data amount of the first uplink data is less than or equal to a first threshold, and/or determining the data channel as the first channel when the data amount of the first uplink data is greater than the first threshold; or,
determining the control channel as the first channel when the data amount of the first uplink data is less than the first threshold, and/or determining the data channel as the first channel when the data amount of the first uplink data is greater than or equal to the first threshold.

13. The method of claim 1 or 2, further comprising:
determining one of the data channel and the control channel as the first channel according to the first uplink control information.

14. The method of claim 13, wherein the determining one of the data channel and the control channel as the first channel according to the first uplink control information comprises:
determining one of the data channel and the control channel as the first channel according to at least one of a type or a data amount of the first uplink control information.

15. The method of claim 1 or 2, further comprising:
determining one of the data channel and the control channel as the first channel based on a sum of a data amount of the first uplink data and a data amount of the first uplink control information.

16. The method of claim 1 or 2, further comprising:
determining one of the data channel and the control channel as the first channel according to at least one of a format or resources of a first control channel, wherein the first control channel is scheduled or configured to transmit the first uplink control information.

17. The method of any one of claims 1 to 16, wherein the transmitting first uplink data and first uplink control information on a first channel comprises:
transmitting the first uplink data and the first uplink control information on the first channel when a first control channel and a first data channel satisfy a first condition,
wherein the first control channel is scheduled or configured to transmit the first uplink control information, the first data channel is scheduled or configured to transmit the first uplink data, and the first condition comprises at least one of:
the first control channel and the first data channel overlap in a time domain; or
the first control channel and the first data channel are in a same time domain unit.

18. The method of any one of claims 1 to 17, further comprising:
when the first channel is the control channel, determining resources used by the first channel according to at least one of following parameters: a data amount of the first uplink data, a data amount of the first uplink control information, a sum of the data amount of the first uplink data and the data amount of the first uplink control information, a resource set of the control channel, or first indication information, wherein the first indication information is configured to indicate a resource index of the control channel.

19. The method of claim 18, wherein the first indication information is carried in third information, and the third information is a latest piece of information received by the terminal device among a plurality of pieces of information for scheduling or configuring at least one of the first uplink data or the first uplink control information.

20. The method of any one of claims 1 to 19, wherein the first uplink data and the first uplink control information are jointly encoded.

21. The method of claim 20, wherein jointly encoding the first uplink data and the first uplink control information comprises: concatenating and then jointly encoding the first uplink data and the first uplink control information.

22. The method of any one of claims 1 to 21, wherein at least two uplink channels overlap in a time domain and/or are in a same time domain unit, the at least two uplink channels comprise at least one first data channel and at least one first control channel, the first data channel is configured to transmit the first uplink data, and the first control channel is configured to transmit the first uplink control information,
wherein constraint conditions for multiplexing, on the first channel, the first uplink data and the first uplink control information in the at least two uplink channels comprise:
a time interval between a time-domain start position of a first uplink channel and a time-domain end position of a first downlink channel is not less than a first duration, wherein the first uplink channel is an uplink channel with an earliest start time among the at least two uplink channels, and the first downlink channel is a downlink channel with a latest end time among downlink channels respectively corresponding to the at least two uplink channels;
and/or,
first downlink control information is detected by the terminal device, the first downlink control information is configured to indicate the first control channel corresponding to the first uplink control information, the terminal device does not expect second downlink control information to be detected after the first downlink control information, the second downlink control information is configured to schedule the first data channel, and the terminal device multiplexes the first uplink control information and the first uplink data in the first data channel.

23. The method of any one of claims 1 to 22, wherein when one first data channel overlaps with a plurality of first control channels in a time domain, the first uplink control information scheduled or configured for transmission on a target control channel and the first uplink data scheduled or configured for transmission on the first data channel are multiplexed on the first channel, and the target control channel is one of the plurality of first control channels.

24. The method of claim 23, wherein the plurality of first control channels do not overlap with each other in the time domain.

25. The method of claim 23, wherein when the plurality of first control channels overlap with each other in the time domain, the first uplink control information scheduled or configured for transmission on the plurality of first control channels and the first uplink data scheduled or configured for transmission on the first data channel are multiplexed on the first channel.

26. The method of any one of claims 23 to 25, wherein the target control channel is one of:
a first control channel with an earliest start time among the plurality of first control channels;
a first control channel with an earliest end time among the plurality of first control channels;
a first control channel corresponding to a smallest serving cell index among the plurality of first control channels; and
a first control channel corresponding to a largest serving cell index among the plurality of first control channels.

27. A data transmission method, performed by a network device, the method comprising:
receiving first uplink data and first uplink control information transmitted on a first channel, wherein the first channel is a data channel or a control channel.

28. The method of claim 27, wherein the first uplink data is scheduled or configured through first information for transmission on a first data channel, and the first uplink control information is scheduled or configured through second information for transmission on a first control channel.

29. The method of claim 28, wherein the first information comprises a first indication field, and the first indication field is configured to indicate that the first channel is one of the data channel and the control channel.

30. The method of claim 28 or 29, wherein the first information comprises a first indication field,
wherein the first indication field is configured to indicate whether multiplexing transmission of the first uplink data and uplink control information on the control channel is allowed; or,
the first indication field is configured to indicate that the first uplink data and uplink control information are multiplexed on the data channel or the control channel.

31. The method of claim 28 or 29, wherein the first information comprises a first indication field, the first indication field is configured to indicate a multiplexing transmission manner of the first uplink data and uplink control information, and the multiplexing transmission manner of the first uplink data and uplink control information is related to at least one of: a channel type, a control channel type, and a type of uplink control information.

32. The method of claim 31, wherein
the control channel type is configured to distinguish between the control channels of different formats; and/or,
the control channel type is configured to distinguish between the control channels carrying different numbers of bits.

33. The method of claim 28, wherein the second information comprises a second indication field, and the second indication field is configured to indicate that the first channel is one of the data channel and the control channel.

34. The method of claim 28 or 33, wherein the second information comprises a second indication field,
wherein the second indication field is configured to indicate whether multiplexing transmission of the first uplink control information and uplink data on the control channel is allowed; or,
the second indication field is configured to indicate that the first uplink control information and uplink data are multiplexed on the data channel or the control channel.

35. The method of claim 28 or 33, wherein the second information comprises a second indication field, the second indication field is configured to indicate a multiplexing transmission manner of the first uplink control information and uplink data, and the multiplexing transmission manner of the first uplink control information and uplink data is related to at least one of: a channel type, or a type of the uplink data.

36. The method of claim 31 or 35, wherein the channel type is configured to distinguish between the data channel and the control channel.

37. The method of claim 27 or 28, wherein one of the data channel and the control channel is determined as the first channel based on a data amount of the first uplink data.

38. The method of claim 37, wherein
the control channel is used as the first channel when the data amount of the first uplink data is less than or equal to a first threshold, and/or the data channel is used as the first channel when the data amount of the first uplink data is greater than the first threshold; or,
the control channel is used as the first channel when the data amount of the first uplink data is less than the first threshold, and/or the data channel is used as the first channel when the data amount of the first uplink data is greater than or equal to the first threshold.

39. The method of claim 27 or 28, wherein one of the data channel and the control channel is determined as the first channel according to the first uplink control information.

40. The method of claim 39, wherein one of the data channel and the control channel is determined as the first channel according to at least one of a type or a data amount of the first uplink control information.

41. The method of claim 27 or 28, wherein one of the data channel and the control channel is determined as the first channel based on a sum of a data amount of the first uplink data and a data amount of the first uplink control information.

42. The method of claim 27 or 28, wherein one of the data channel and the control channel is determined as the first channel according to at least one of a format or resources of a first control channel, wherein the first control channel is scheduled or configured to transmit the first uplink control information.

43. The method of any one of claims 27 to 42, wherein the receiving first uplink data and first uplink control information transmitted on a first channel comprises:
receiving the first uplink data and the first uplink control information transmitted on the first channel when a first control channel and a first data channel satisfy a first condition,
wherein the first control channel is scheduled or configured to transmit the first uplink control information, the first data channel is scheduled or configured to transmit the first uplink data, and the first condition comprises at least one of:
the first control channel and the first data channel overlap in a time domain; or
the first control channel and the first data channel are in a same time domain unit.

44. The method of any one of claims 27 to 43, wherein when the first channel is the control channel, resources used by the first channel are determined according to at least one of following parameters: a data amount of the first uplink data, a data amount of the first uplink control information, a sum of the data amount of the first uplink data and the data amount of the first uplink control information, a resource set of the control channel, or first indication information, wherein the first indication information is configured to indicate a resource index of the control channel.

45. The method of claim 44, wherein the first indication information is carried in third information, and the third information is a latest piece of information received by a terminal device among a plurality of pieces of information for scheduling or configuring at least one of the first uplink data or the first uplink control information.

46. The method of any one of claims 27 to 45, wherein the first uplink data and the first uplink control information are jointly encoded.

47. The method of claim 46, wherein the receiving first uplink data and first uplink control information transmitted on a first channel comprises:
decoding information carried and transmitted on the first channel to obtain the first uplink data and the first uplink control information.

48. The method of any one of claims 27 to 47, wherein at least two uplink channels overlap in a time domain and/or are in a same time domain unit, the at least two uplink channels comprise at least one first data channel and at least one first control channel, the first data channel is configured to transmit the first uplink data, and the first control channel is configured to transmit the first uplink control information;
wherein constraint conditions for multiplexing, on the first channel, the first uplink data and the first uplink control information in the at least two uplink channels comprise:
a time interval between a time-domain start position of a first uplink channel and a time-domain end position of a first downlink channel is not less than a first duration, wherein the first uplink channel is an uplink channel with an earliest start time among the at least two uplink channels, and the first downlink channel is a downlink channel with a latest end time among downlink channels respectively corresponding to the at least two uplink channels;
and/or,
second downlink control information is not expected to be detected by a terminal device after detection of first downlink control information, wherein the second downlink control information is configured to schedule the first data channel, the first downlink control information is configured to indicate the first control channel corresponding to the first uplink control information, and the first uplink control information and the first uplink data in the first data channel are multiplexed.

49. The method of any one of claims 27 to 48, wherein when one first data channel overlaps with a plurality of first control channels in a time domain, the first channel is configured to multiplex first uplink control information scheduled or configured for transmission on a target control channel and first uplink data scheduled or configured for transmission on the first data channel, and the target control channel is one of the plurality of first control channels.

50. The method of claim 49, wherein the plurality of first control channels do not overlap with each other in the time domain.

51. The method of claim 49, wherein when the plurality of first control channels overlap with each other in the time domain, the first channel is configured to multiplex first uplink control information scheduled or configured for transmission on the plurality of first control channels and first uplink data scheduled or configured for transmission on the first data channel.

52. The method of any one of claims 49 to 51, wherein the target control channel is one of:
a first control channel with an earliest start time among the plurality of first control channels;
a first control channel with an earliest end time among the plurality of first control channels;
a first control channel corresponding to a smallest serving cell index among the plurality of first control channels; and
a first control channel corresponding to a largest serving cell index among the plurality of first control channels.

53. A data transmission apparatus, comprising:
a transmitting module, configured to transmit first uplink data and first uplink control information on a first channel, wherein the first channel is a data channel or a control channel.

54. A data transmission apparatus, comprising:
a receiving module configured to receive first uplink data and first uplink control information transmitted on a first channel, wherein the first channel is a data channel or a control channel.

55. A communication device, comprising a processor and a memory, wherein the memory is configured to store a computer program, and the processor is configured to execute the computer program to implement the method of any one of claims 1 to 26, or to implement the method of any one of claims 27 to 52.

56. A computer-readable storage medium, having stored a computer program, wherein the computer program is capable of being executed by a processor to implement the method of any one of claims 1 to 26, or to implement the method of any one of claims 27 to 52.

57. A chip, comprising a programmable logic circuit and/or program instructions, wherein the chip, when operated, is configured to implement the method of any one of claims 1 to 26, or to implement the method of any one of claims 27 to 52.

58. A computer program product, comprising computer instructions stored in a computer-readable storage medium, from which a processor reads and executes the computer instructions to implement the method of any one of claims 1 to 26, or to implement the method of any one of claims 27 to 52.
